(19) Europäisches Patentamt
European Patent Office
Office européen des brevets

(11) **EP 4 757 249 A1**

(12) **EUROPEAN PATENT APPLICATION**

(43) Date of publication:
**10.06.2026 Bulletin 2026/24**

(21) Application number: **25218976.6**

(22) Date of filing: **27.11.2025**

(51) International Patent Classification (IPC):
*H04L 9/40* (2022.01)       *H04L 43/022* (2022.01)
*H04L 43/028* (2022.01)       *H04L 43/062* (2022.01)

(52) Cooperative Patent Classification (CPC):
**H04L 63/1416; H04L 43/022; H04L 43/028;
H04L 43/062; H04L 63/0263; H04L 63/1408;
H04L 63/1425; H04L 63/1441; H04L 63/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **06.12.2024 US 202463729174 P
10.06.2025 US 202519233410**

(71) Applicant: **Microsoft Technology Licensing, LLC
Redmond, WA 98052 (US)**

(72) Inventors:
• **LEI, JASON SHUHUA
Redmond, 98052 (US)**

• **MANI, SATHIYA KUMARAN
Redmond, 98052 (US)**
• **KANDULA, SRIKANTH
Redmond, 98052 (US)**
• **GONG, FENGCHEN
Redmond, 98052 (US)**
• **HSIEH, TSUWANG
Redmond, 98052 (US)**

(74) Representative: **CMS Cameron McKenna Nabarro
Olswang LLP
Cannon Place
78 Cannon Street
London EC4N 6AF (GB)**

(54) **NETWORK ANOMALY DETECTION**

(57) The description relates to enhancing network security. One example can translate packet-level IDS rulesets into flow-level rulesets and can perform rule checking of flow summaries utilizing the flow-level rulesets.

Method <u>1600</u>

1602

translate packet-level IDS rulesets into flow level rulesets

1604

perform rule checking of flow summaries utilizing the flow level rulesets

**FIG. 16**

EP 4 757 249 A1

**Description**

**BACKGROUND**

Various approaches exist for detecting network attacks. For instance, one way to protect a network from attacks involves analyzing network communications for an attack signature, but this approach is typically limited to detecting known attacks and/or is very resource intensive. Another approach is to analyze individual packet traces of inbound/outbound traffic to detect attacks. However, while this approach can be employed to detect new attacks, analyzing individual packet traces for large-scale networks, such as data center networks, involves analyzing massive quantities of data and is not always feasible due to the resource costs.

**SUMMARY**

This patent relates to enhancing network security. One example can translate packet-level intrusion detection system (IDS) rulesets into flow-level rulesets and can perform rule checking of flow summaries utilizing the flow-level rulesets.

This summary is intended to provide a very brief explanation of some of the present concepts and is not intended to be limiting or all-encompassing of the concepts described and claimed in this patent.

**BRIEF DESCRIPTION OF THE DRAWINGS**

The accompanying drawings illustrate implementations of the concepts conveyed in the present patent. Features of the illustrated implementations can be more readily understood by reference to the following description taken in conjunction with the accompanying drawings. Like reference numbers in the various drawings are used wherever feasible to indicate like elements. Further, the left-most numeral of each reference number conveys the figure and associated discussion where the reference number is first introduced.

FIGS. 1, 2A-2D, 3, 4, and 15 show example systems for accomplishing enhanced network security concepts in accordance with some implementations.
FIGS. 5A, 5B, 7, 8, and 9 relate to rules for accomplishing enhanced network security concepts in accordance with some implementations.
FIGS. 6 and 10A show example pipelines for accomplishing enhanced network security concepts in accordance with some implementations.
FIGS. 10B, 11, 12A, 12B, 13, and 14A-14C show example graphs relating to enhanced network security concepts in accordance with some implementations.
FIG. 16 shows an example flowchart for enhancing network security concepts in accordance with some implementations.

**DETAILED DESCRIPTION**

OVERVIEW

The widespread adoption of public cloud environments for scalable infrastructure and data management necessitates heightened attention to security practices. As organizations migrate critical systems and sensitive data to the cloud, they face complex security challenges, starkly illustrated by high-profile breaches such as SolarWinds, MOVEit Transfer, and Midnight Blizzard. These incidents, which resulted in significant data compromises and financial losses, underscore the critical need for proactive security strategies. In this context, network intrusion detection systems (IDSes) serve as a cornerstone of cloud security, acting as a vital first line of defense against malicious activities.

Existing approaches for detecting network attacks have certain limitations. Notably, detecting network attacks has been very resource intensive. Traditionally, network attacks are detected by analyzing detailed packet traces. The resource usage associated with analyzing detailed packet traces has constrained how and where resources are utilized in the detection efforts. For instance, inbound (and outbound) (e.g., "north-south") communications of a trusted zone, such as a data center, are considered high risk. Thus, various security tools, such as fire walls, intrusion detection system (IDS), and/or intrusion prevention system (IPS) are allocated to monitor these communications. However, internal (e.g., "east-west") communications within the trusted zone are considered to be low risk. This decision is further driven by the massive amounts of data that tend to be involved in east-west communications. However, this risk assessment relies on the presumption that the security tools operating on the north-south communications prevented network attacks from reaching the trusted zone. In reality, while most network attacks can be blocked, some reach the trusted zone.

Once in the trusted zone, the network attack can compromise (e.g., take over) a node, such as a router, switch, or server. The network attack can cause the compromised node to communicate with other nodes in the trusted zone to accomplish its attack. The present concepts provide a technical solution that identifies potentially compromised nodes due to changes in their behavior, such as which nodes they communicate with and/or the frequency of their communications. The technical solution utilizes relatively few resources to identify potentially compromised nodes. The resource utilization is very low compared to analyzing detailed packet traces of every east-west communication.

Once potentially compromised nodes are identified, the present concepts can take various actions to mitigate the network attack risk. For instance, the action can involve employing fire walls, IDS, and/or IDP on the potentially compromised nodes, among other actions. This two-step approach allows implementations of the present concepts to enhance network security with relatively low resource usage. Further, the present concepts do not require packet traces to be performed on every east-west communication and thus avoid the massive amounts of data and processing that would otherwise be involved in a blanket packet analysis detection technique.

A significant limitation of contemporary IDSes is their predominant focus on monitoring north-south traffic-communication between internal networks and external entities-while largely overlooking east-west traffic, the internal communication occurring within cloud infrastructures. The substantial scale and absence of centralized bottleneck links render comprehensive monitoring of east-west traffic extremely challenging. However, insufficient monitoring of these internal pathways introduces critical vulnerabilities, leaving cloud environments exposed to internal threats and lateral movement attacks.

Existing intrusion detection systems (IDSes) are typically categorized as either (i) rule-based, relying on network packet inspection based on rules or signatures, or (ii) anomaly-based, analyzing time-series data derived from packet headers or traffic statistics. However, both approaches encounter substantial limitations when applied to east-west traffic. On the one hand, rule-based systems necessitate the redirection or duplication of all internal traffic to dedicated security appliances, resulting in considerable configuration complexity and operational expenditure. Even commercial solutions designed for east-west traffic monitoring often remain too costly for widespread adoption. On the other hand, anomaly-based systems, while capable of leveraging flow-level statistics at a significantly reduced cost for monitoring east-west traffic, are hindered by limited interpretability of detected threats, requiring additional human verification and rendering them ineffective for real-time threat blocking or quarantine.

The present concepts, which may be referred to as 'KnowCheck' provide a robust and efficient east-west traffic security solution specifically designed to meet three essential criteria for widespread deployment: (i) minimal operational cost, (ii) full explainability, and (iii) a near-zero false positive rate, collectively enabling near real-time threat detection and neutralization. Additionally, KnowCheck offers configurable trade-offs between cost and threat coverage, empowering organizations to precisely tailor deployments to align with their unique budgetary constraints and security priorities. KnowCheck achieves these objectives with three core techniques that form a multi-stage pipeline. The three core techniques include: efficient flow-level rule matching; guided traffic inspection via a rule distribution model; and dynamic rule pruning for packet-level checkers.

Efficient flow-level rule matching allows KnowCheck to convert traditional packet-level IDS rulesets into optimized flow-level rulesets. This enables efficient evaluation using low-cost flow summarizers commonly available in public cloud environments, such as VPC Flow Logs and NSG Flow Logs. By employing these flow-based rules as the first line of defense, KnowCheck significantly reduces the computational overhead typically associated with intrusion detection while ensuring comprehensive coverage of all network flows without requiring resource-intensive packet capture. Furthermore, the present techniques include a novel flow-level rule checker that continuously and cost-effectively monitors network traffic, promptly detecting potential rule violations with minimal resource consumption.

The guided traffic inspection via a rule distribution model provides an efficient inspection technique. Since flow-level summaries inherently lack packet payload information, threats associated with rules requiring deep packet inspection (DPI) cannot be reliably identified through flow-level rule matching alone. To overcome this limitation, the present technical solutions include a rule distribution model that periodically identifies specific IP addresses warranting deeper inspection based on observed behavioral changes relevant to flow-level rulesets. By leveraging virtual tapping (vTAP) capabilities available in public cloud infrastructures this technique dynamically sends this targeted subset of network traffic to full-fledged, packet-level IDSes for in-depth analysis. This approach ensures precise threat identification and effectively eliminates false alerts that may arise from relying solely on flow-level rule matching. This strategic approach embodies a deliberate and configurable trade-off. This trade-off consciously accepts a minimal increase in threat detection latency and the potential risk of overlooking transient threat packets, in exchange for substantially lowering the prohibitive operational costs incurred by processing all network packets through resource-intensive security appliances.

The dynamic rule pruning for packet-level checkers further reduces the operational costs associated with packet-level IDSes. KnowCheck includes a novel dynamic rule pruning mechanism tailored to specific network flows. Leveraging insights derived from the previously described rule distribution model, the technical solutions include a rule pruner that systematically estimates the probability of individual rules being triggered for each targeted IP address. Rules whose estimated probabilities fall below a user-defined threshold are dynamically pruned from packet-level IDSes. The user-defined threshold represents an acceptable false-negative rate or the likelihood of missing genuine threats. This innovative approach not only eliminates unnecessary rule evaluations, significantly enhancing efficiency, but also provides organizations with configurable and precise trade-offs between security coverage and operational expenditure. This technical solution enables tailored protection aligned with diverse budgetary constraints and security requirements.

EXAMPLE NETWORK ARCHITECTURE

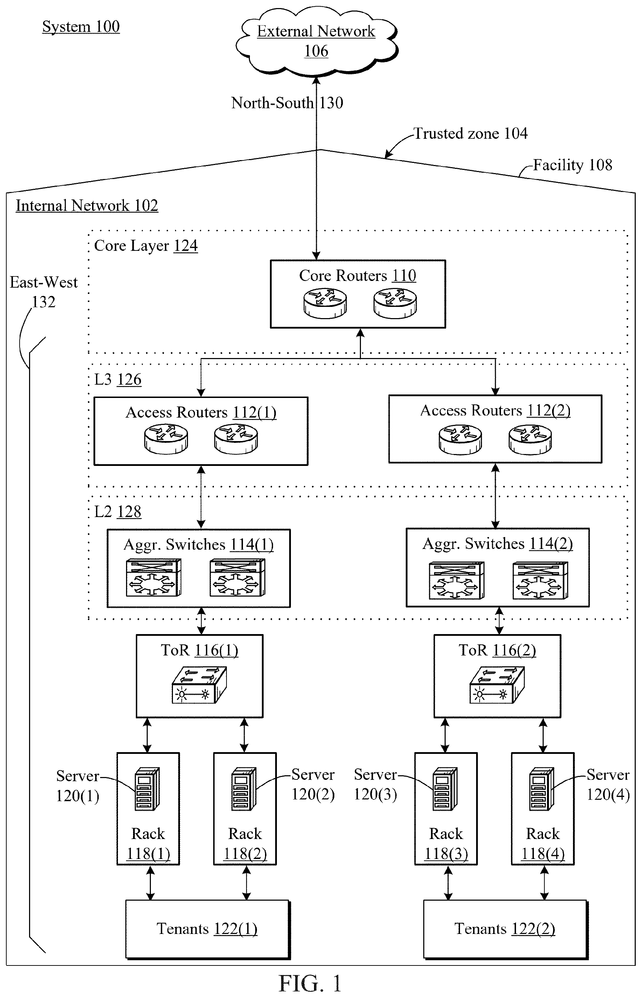

FIGS. 1-2D collectively illustrate example systems 100 that include an internal network 102 that can be evaluated using the concepts discussed herein. The internal network 102 operates in a trusted zone 104. The internal network 102 is distinguished from an external network 106, such as the Internet that operates outside of the trusted zone 104. The trusted zone 104 can occur in a physical facility 108, such as a data center.

In the example configuration shown in FIG. 1, the internal network 102 includes various devices or components such as one or more core routers 110(1) and 110(2), one or more access routers 112(1) and 112(2), one or more aggregation switches 114(1) and 114(2), one or more top-of-rack (ToR) switches 116(1) and 116(2), and/or one or more racks 118(1), 118(2), 118(3), and 118(4). Each of the racks 118 can include one or more server devices (e.g., servers) 120 that host tenants 122(1) and/or 122(2). As used here, the core routers 110 represent the gateway between the internal network 102 and the external network 106.

Note that different instances of the various devices in FIG. 1 are distinguished by parenthetical references, e.g., 116(1) refers to a different ToR switch than 116(2). When referring to multiple devices collectively, the parenthetical will not be used, e.g., ToRs 116 can refer to either or both of ToR 116(1) and/or ToR 116(2). Note also that internal network 102 can include various devices or components not shown in FIG. 1, e.g., various intrusion detection and prevention systems, virtual private networks (VPNs), firewalls, load balancers, etc.

From a logical standpoint, the internal network 102 can be organized into a hierarchy that includes a core layer 124, an L3 aggregation layer 126, and an L2 aggregation layer 128. This logical organization can be based on the functional separation of Layer-2 (e.g., trunking, virtual local area networks, etc.) and Layer-3 (e.g., routing) responsibilities. In FIG. 1, a limited number of network devices and applications are shown, but the disclosed implementations can be implemented with any number of networking devices and/or applications. Furthermore, note that internal network 102 is just one example, and various other network structures are possible, e.g., the concepts disclosed herein can be employed in networks that range from relatively small networks without L2/L3 aggregation layers to massive server farms used for high-performance cloud computing.

In some cases, network devices are deployed redundantly, e.g., multiple access routers 112 can be deployed in redundancy groups to provide redundancy at the L3 aggregation layer 126. Likewise, in implementations with multiple aggregation switches 114, the multiple aggregation switches can be deployed in redundancy groups to provide redundancy at the L2 aggregation layer 128. Generally, in a redundancy group, the group contains multiple members and individual members can perform the switching/routing functions when other member(s) of the redundancy group fail.

ToRs 116 (also known as host switches) connect the servers 120 hosted by the racks 118 to a remainder of the internal network 102. Host ports in these ToR switches can be connected upstream to the aggregation switches 114. These aggregation switches can serve as aggregation points for Layer-2 traffic and can support high-speed technologies such as 10 Gigabit Ethernet to carry large amounts of traffic (e.g., data).

Traffic from an aggregation switch 114 can be forwarded to an access router 112. The access router can use Virtual Routing and Forwarding (VRF) to create a virtual Layer-3 environment for each tenant. Generally, tenants 122(1) and 122(2) can be software programs, such as virtual machines or applications, hosted on servers 120 which use network devices for connectivity either internally within facility 108 or externally to other devices accessible over external network 106.

Some tenants 122, such as user-facing applications, may use load balancers to improve performance. Redundant pairs of load balancers can connect to an aggregation switch 114 and perform mapping between static IP addresses (exposed to clients through the Domain Name System, or DNS) and dynamic IP addresses of the servers to process user requests to tenants 122. Load balancers can support different functionalities, such as network address translation, secure sockets layer or transport layer security acceleration, cookie management, and data caching.

Two different types of communication (or traffic) are represented in system 100. North-south traffic 130 involves communication between the external network 106 and the internal network 102. East-west traffic 132 involves communication within the internal network 102.

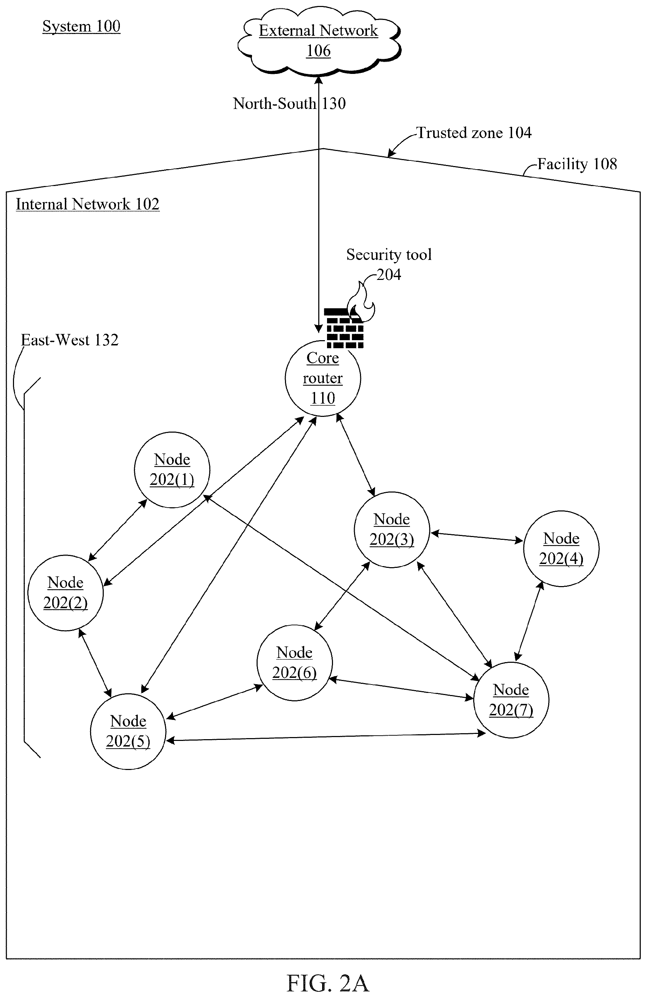

In the example configuration shown in FIGS. 2A-2D, a set of nodes 202 in the internal network 102 represents the access routers 112, aggregation switches 114, ToR switches 116, racks 118, and/or servers 120 (and/or additional or different components) of FIG. 1.

Looking at FIG. 2A, a security tool 204, such as a firewall, IDS, and/or IPS is positioned relative to the core router 110 to examine (incoming) north-south communications 130 (e.g., traffic) to protect the internal network 102. As mentioned above, these security tools tend to examine all packets of the incoming communications. This examination is very resource intensive. A similar examination of all east-west communications 132 within the internal network is prohibitively expensive. Further, tapping all east-west communications significantly increases the complexity of the system. Further still, mirroring the traffic to the security tool can also overwhelm the network. However, not checking the east-west communications 132 and simply relying on the adequacy of the security tool 204 is very risky. As will be explained below, the present concepts provide a technical solution that is preferable to these two undesirable situations.

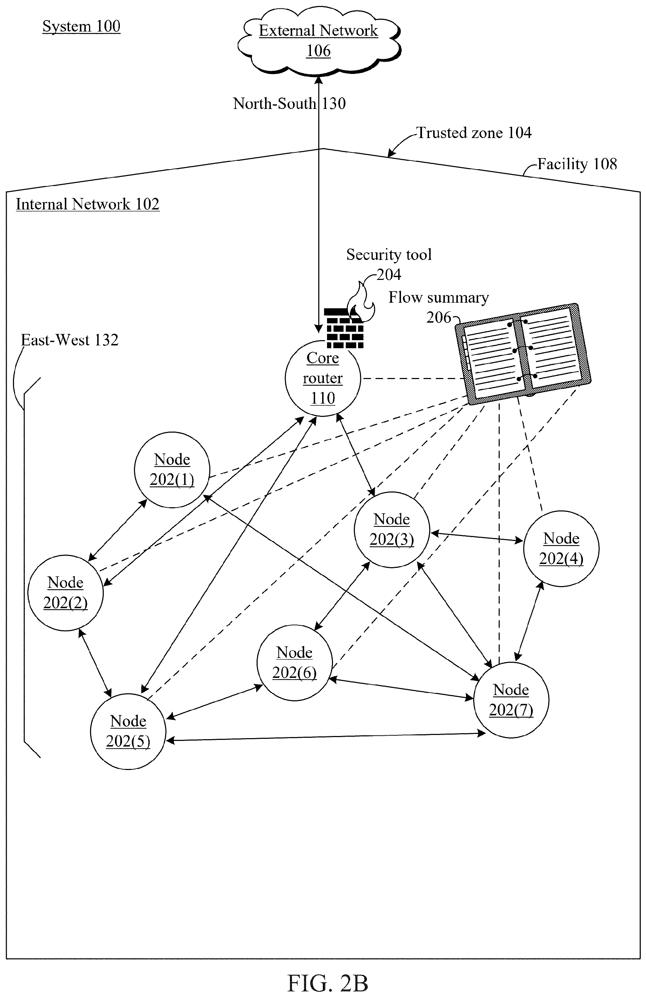

FIG. 2B shows a flow summary or flow log 206 relating to nodes 202. The flow summary 206 includes information about communications from individual nodes 202 of the internal network. Flow summaries are presently available in many environments, such as Azure NSG flow logs, AWS VPC Flow logs, etc.

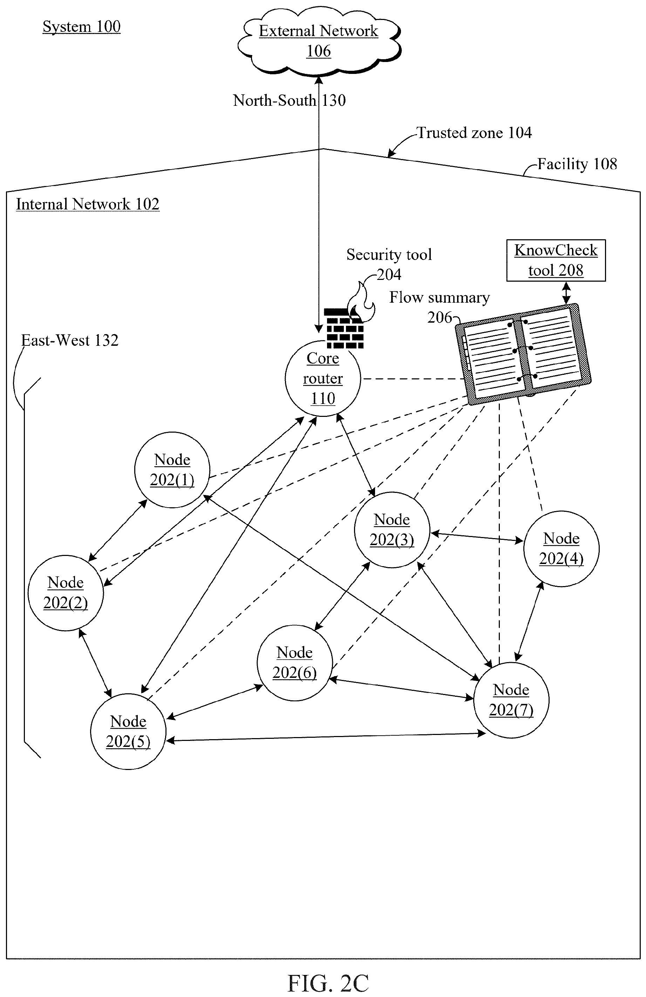

FIG. 2C introduces a novel component termed KnowCheck tool 208 that can implement the disclosed KnowCheck concepts. KnowCheck tool 208 can review the flow summary 206 to identify changes in node behavior that may be associated with a compromised node (e.g., a node subject to a network attack). KnowCheck tool 208 can identify these potentially compromised nodes from behavior changes. The KnowCheck tool 208 identifies the potentially compromised nodes without analyzing detailed packet traces for the nodes. For purposes of explanation, assume that KnowCheck tool 208 identifies behavior changes to individual node 202(2) that indicate this node is potentially compromised.

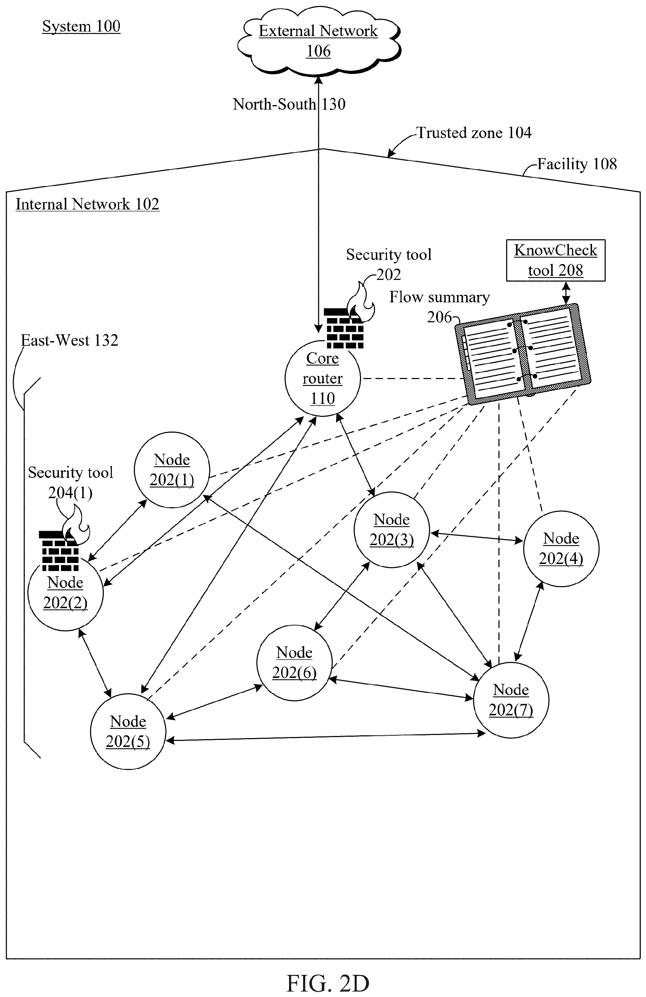

FIG. 2D shows an example action that can be taken by KnowCheck tool 208 to the potentially compromised node 202(2). In this example, a security tool 204(1) is instantiated relative to the potentially compromised node 202(2). The security tool 204(1), such as a firewall, IDS, or IPS can perform more resource intensive measures relative to this individual node, such as analyzing detailed packet traces. Note, however, that this resource intensive measure is only employed to the potentially compromised node rather than all nodes in the internal network 102. This targeted measure significantly decreases resource usage compared to blanket application of security tools across all nodes.

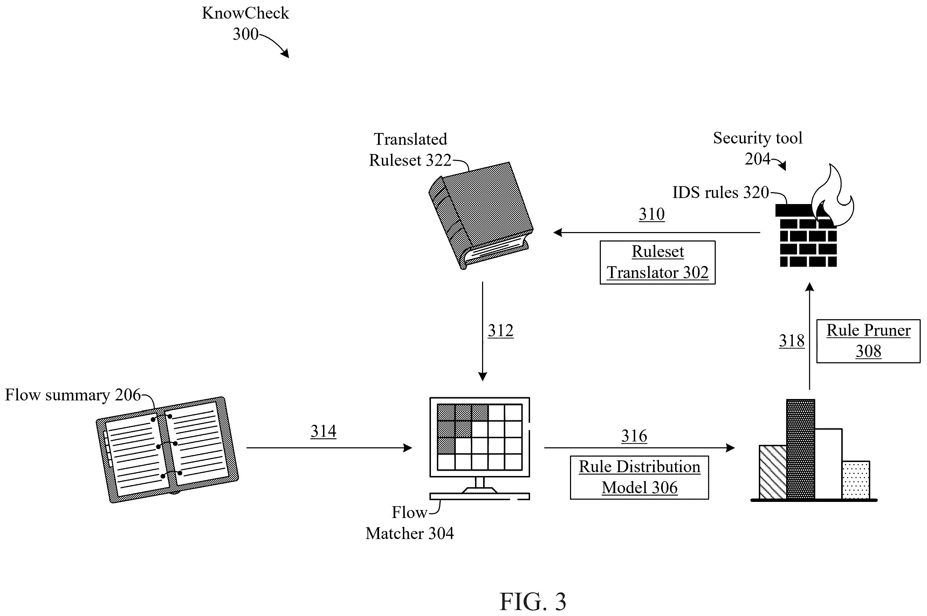

The network security problems introduced above are exacerbated by the increasing complexity and scale of modern data centers. These conditions necessitate advanced security measures to protect against sophisticated cyber threats. Traditional security solutions, such as intrusion detection systems (IDS), primarily focused on north-south traffic, often fail to adequately secure east-west traffic within data centers. In contrast, KnowCheck tool 208 provides a security framework designed to address these challenges by achieving three primary technical solutions: comprehensive monitoring, resource cost efficiency, and/or explainability, among others. Briefly, the KnowCheck tool translates traditional packet-level IDS rulesets into flow-level rulesets, which enables efficient rule checking against low-cost flow summaries. This approach significantly reduces computational overhead while ensuring extensive coverage of network flows. Additionally, the KnowCheck tool employs a rule distribution model to dynamically guide IDS placement, strategically positioning taps on network nodes with the highest likelihood of detecting intrusions. To further enhance efficiency, the KnowCheck tool utilizes a contextual-based rule pruning technique, reducing the number of applicable packet-level rules and minimizing the computational burden. Through these innovative techniques, the KnowCheck tool provides a scalable and effective solution for securing east-west traffic in trusted zones 104, such as data centers. These aspects are described in more detail below relative to FIG. 3.

FIG. 3 shows an example KnowCheck 300 implementation. This implementation can be accomplished by the KnowCheck tool 208 introduced above. KnowCheck provides a technical solution to the technical problems introduced above, some of which are now explained in more detail. One such example relates to the expansion of public cloud services, which face ongoing security challenges. Incidents like SolarWinds, Midnight Blizzard, and Snowflake highlight attack vectors from compromised credentials to exploited software providers. These breaches lead to leaks of sensitive information, financial losses, and erosion of customer trust, underscoring the need for advanced security technologies. Most security measures today, such as firewalls and intrusion detection systems (IDS), focus on north-south traffic between external networks and data centers but often fail to protect east-west traffic within a data center. Once inside the internal network, such as by utilizing compromised nodes, secure shell (SSH) keys, or other credentials, an attacker can perform lateral movement with relative ease. Zero-trust architecture aims to address this problem by assuming each network node can be compromised. However, current solutions like micro-segmentation only limit the attack surface and do not provide intrusion detection against east-west threats.

Recent solutions aim to address the challenges of securing east-west traffic by enabling traffic inspection through virtual taps (V-taps). V-taps facilitate the monitoring of specific network nodes by streaming their network traffic to intrusion detection systems (IDS) and other security tools. However, east-west traffic often lacks a single bottleneck link, making it challenging to determine optimal V-tap placement. Given that IDS deployment and maintenance are notoriously expensive, such as 250 cores to secure a 100 Gbps link, placing V-taps on all network nodes is infeasible. Alternatively, commercial solutions propose distributed firewalls that run IDS on hypervisors in a distributed manner. Nevertheless, due to the cost of running IDS, these solutions are prohibitively expensive for widespread deployment.

In this example, KnowCheck 300 includes four main components, including a ruleset translator 302, a flow matcher 304, a rule distribution model 306, and a rule pruner 308.

Process flows are represented by arrows 310, 312, 314, 316, and 318. As indicated at 310, ruleset translator 302 accesses security tool 204, such as an IDS and obtains packet-level IDS rules 320. The ruleset translator 302 translates these packet-level IDS rules 320 into flow-level rules to create translated ruleset 322 (e.g., flow-level or flow based rules). As indicated at 312, flow matcher 304 receives the translated ruleset 322. As indicated at 314, flow matcher 304 continuously monitors network traffic in the flow summary 206 using flow-level rules of translated ruleset 322. The flow matcher 304 can compare the network traffic from the flow summary 206 to the translated ruleset to identify potential anomalies as flow-level rule violations.

As indicated at 316, rule distribution model 306 dynamically guides V-tap placement (and/or other measures) based on statistical changes in flow-level rule violations. As indicated at 318, rule pruner 308 enables efficient packet-level IDS checking using contextual-based rule pruning. Stated another way, the rule pruner retains more relevant IDS packet-based rules and prunes less relevant IDS packet-based rules to increase resource usage efficiency. By combining these components, KnowCheck 300 provides a scalable and effective solution for securing east-west traffic in trusted zones, such as data centers, while using less resources than existing techniques.

As explained above, KnowCheck 300 translates traditional packet-level IDS rulesets into flow-level rulesets at 310. The flow-level rulesets (e.g., translated rulesets 322) can be efficiently checked against low-cost flow summarizers, such as virtual private cloud (VPC) Flow Logs and network security group (NSG) Flow Logs. By using flow-based rules as the first line of defense, KnowCheck significantly reduces the computational overhead associated with intrusion detection and covers all network flows without packet capture. The technical solution includes the novel flow-level rule checker or flow matcher 304 to continuously monitor network traffic and identify potential rule violations at a very low resource cost.

As introduced above, rule distribution model 306 provides guided tapping because flow-level summaries do not contain all the information required for intrusion detection, such as packet payloads. KnowCheck employs rule distribution model 306 to dynamically detect potential threats and guide IDS placement. Specifically, KnowCheck tracks statistical changes in flow-level rule violations and uses these changes to identify network nodes exhibiting behavior changes pertinent to IDS rulesets. KnowCheck then strategically places V-taps on these nodes to stream detailed packet-level information to the IDS. This approach ensures that V-taps are positioned on network nodes with the highest likelihood of detecting intrusions (e.g., compromised nodes).

To ensure efficient checking of packet-level IDS rules, rule pruner 308 employs a contextual-based rule pruning technique to reduce the number of rules applicable to the target node. This technique selects a subset of rules based on the nature of the network node (e.g., web server, database server) and outputs from the statistical model, and further merges these rules using novel rule merging algorithms. This approach ensures that the packet-level IDS checks only the rules relevant to the target network node and detected threats, thereby minimizing the computational overhead associated with packet-level intrusion detection.

KnowCheck 300 provides a technical solution that is a scalable and explainable rule-based intrusion detection system designed to secure east-west data center traffic. To overcome the challenges and limitations of existing solutions, KnowCheck provides a technical solution that meets at least three primary objectives: (1) Comprehensive monitoring: ensures all east-west traffic flows are effectively covered; (2) Resource cost (e.g., usage) efficiency: minimizes the overhead related to intrusion detection and packet processing; and (3) Explainability: provides clear and detailed explanations for detected intrusions to enable swift response and remediation. KnowCheck accomplishes these objectives through three core techniques: efficient flow-level rule matching by flow matcher 304; guided tapping using rule distribution model 306; and contextual-based rule pruning at 318 for packet-level checkers.

The present concepts provide an innovative security framework that delivers a scalable, cost-effective, and explainable solution for safeguarding east-west datacenter traffic. The present concepts provide a design for the efficient checking of flow-level rules, significantly reducing detection overheads. The present concepts provide a rule distribution model that strategically guides V-tap placement by analyzing statistical changes in flow-level rule violations. The present concepts provide an algorithm that prunes and merges IDS rules, tailored to the specific context of network nodes, optimizing detection efficiency.

KnowCheck offers an innovative security framework that delivers a cost-effective and explainable solution for safeguarding east-west data center traffic with configurable trade-offs between cost and threat coverage. KnowCheck includes a rule distribution model for guided, targeted deep packet inspection. KnowCheck provides a dynamic rule pruning mechanism to optimize packet-level IDS efficiency while preserving security targets.

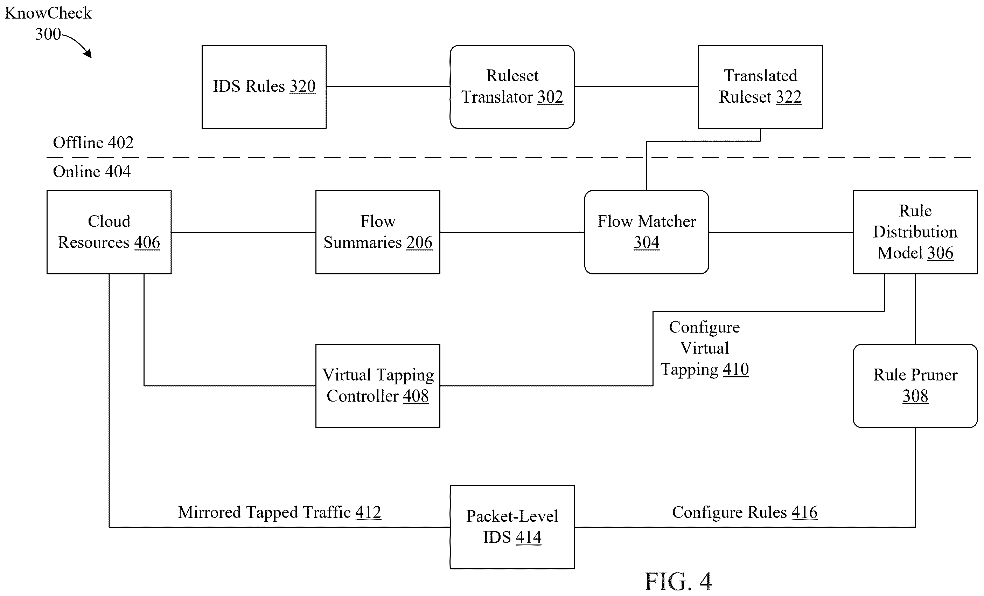

KnowCheck provides a novel, efficient, and fully explainable security framework designed to secure east-west traffic in public cloud environments. One of the core insights behind KnowCheck is that full explainability and low operational cost can be achieved simultaneously by transforming packet-level rulesets into flow-level rulesets. These flow-level rulesets are evaluated against low-cost flow summaries, generating insightful, rule-informed signals. These signals drive guided tapping with dynamic rule pruning, enabling significant cost savings while preserving the explainability and precision of the original rulesets. One example KnowCheck configuration is described above relative to FIG. 3. Another example KnowCheck configuration is described below relative to FIG. 4.

FIG. 4 shows another example implementation of KnowCheck 300. In this case, for purposes of explanation, the KnowCheck components are shown performing functions offline 402 and/or online 404 (e.g., in realtime). The time aspects may be directed to optimizations and, as such, alternative configurations are contemplated.

FIG. 4 includes IDS rules 320 (e.g., IDS packet-based rulesets), ruleset translator 302, translated rulesets 322 (e.g., translated flow-based rulesets), cloud resources 406, flow summaries 206, flow matcher 304, rule distribution model 306, rule pruner 308, virtual tapping controller 408, and packet-level IDS 410.

In this implementation, KnowCheck's ruleset translator 302 transforms the IDS rules 320 into flow-level translated rulesets 322 that are compatible with the schema of flow summaries 206. This translation ensures that all matches detected at the packet-level are preserved at the flow-level, thereby eliminating false negatives.

KnowCheck's flow matcher 304 continuously processes flow records generated by cloud resources 406 and evaluates them against the flow-level translated rulesets 322. Since directly raising alerts based on flow matching can result in a significant number of false positives, KnowCheck instead aggregates these results into rule distribution model 306.

Using the rule distribution model 306, KnowCheck's virtual tapping controller 408 identifies nodes in the network exhibiting behavior changes that are directly associated with IDS rules 320. KnowCheck's virtual tapping controller 408 then selects these high-priority nodes, which are more likely to exhibit abnormal behavior, for virtual tapping at 410. This process mirrors the selected or tapped traffic 412 to a packet-level IDS 414 for deeper inspection. Additionally, KnowCheck's rule pruner 308 dynamically removes rules from the packet-level IDS 410 that are associated with normal or low-risk behaviors, further optimizing resource usage while maintaining security coverage. Only the alerts raised by the packet-level IDS 410 (e.g., configured rules 416) are reported by KnowCheck, so each alert comes with a specific IDS rule ID and its detailed descriptions.

Ruleset translator 302 aims to derive patterns from packet-based rules that are used to match against network flow logs (e.g., flow summaries 206). In this implementation, there are three types of flow information ruleset translator 302 extracts from the original rules: (a) 5-tuple data, which includes protocol, source and destination IP addresses, and source and destination ports; (b) the minimum and maximum number of packets in the flow; (c) the minimum and maximum total number of bytes in the flow.

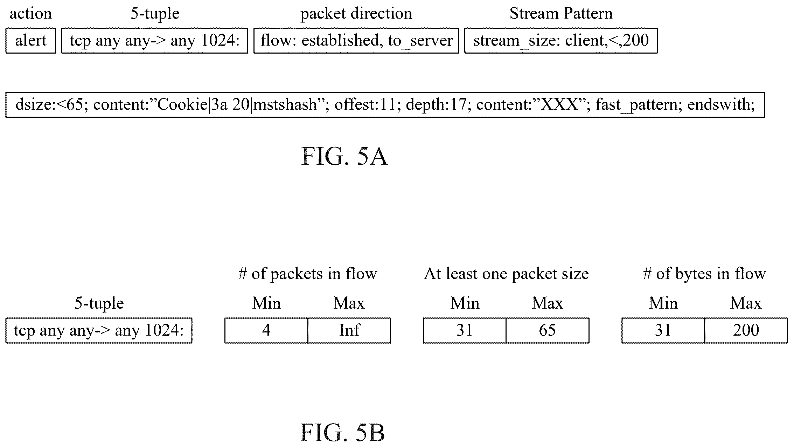

FIGS. 5A and 5B collectively illustrate results of an example translation algorithm employed by information ruleset translator 302. FIG. 5A shows an example rule and FIG. 5B shows the translated rule. The 5-tuple pattern remains the same during translation. The establishment status of the flow in the original rule can indicate the minimum number of packets because it takes several packets to establish the state under the protocol. The string matching pattern in the rule can specify the minimum number of bytes in a packet to trigger the rule because the pattern demands an exact string at a specific index in the payload. Lastly, a rule can restrict the stream size, which is the maximum number of bytes in the flow. Note that the translated ruleset is an over-approximation of the packet-based ruleset. Applying translated rules to network flows can create false positives, but no false negatives. KnowCheck deals with the false positives via the rule distribution model.

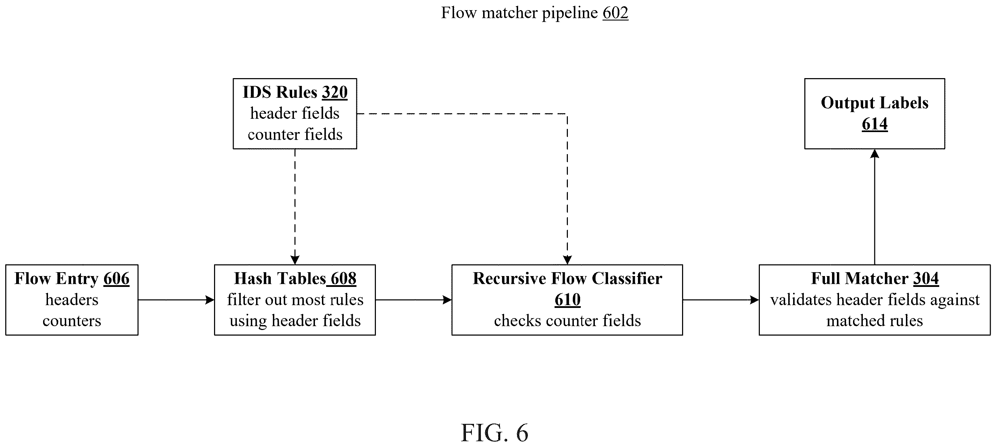

The description now returns to FIG. 4 and flow matcher 304. Datacenter networks are typically decentralized by design, meaning full coverage of all east-west traffic would require deployment of a traditional IDS to every single node within the network. This rapidly becomes prohibitively expensive since production clusters may have hundreds of nodes, totaling multiple hundreds of thousands of dollars per year. Existing ML-based IDS solutions such as NetVigil address this scaling issue by operating at flow granularity rather than packet granularity. However, as a consequence, these solutions lose the ability to explain decisions, making it difficult for the user to discern information such as the type, origin, nature, and timing of attacks. KnowCheck maintains low costs by operating at a flow granularity similarly to NetVigil, while restoring explainability by using a traditional IDS ruleset to inform its decisions. The flow matcher's responsibility is to achieve this explainability by labeling each flow log entry (e.g., flow summaries 206) with its matching rule IDs from the translated ruleset 322. The end-to-end pipeline for the flow matcher is shown in FIG. 6. Now, the description explains how each of these components interacts and functions.

FIG. 6 shows flow matcher pipeline 602. In this example, flow matcher pipeline 602 includes IDS rules 320, flow entry 606, hash tables 608, recursive flow classifier 610, full matcher 304, and output labels 614.

Hash tables 608 contribute to fast field matching. As mentioned, one goal of the flow matcher 304 is to be inexpensive, fast, and capable of handling thousands of rules simultaneously. As such, KnowCheck replicates Tuple-Merge's efficient hash-table-based design. Each IDS rule 320 specifies the ranges of source and destination IP addresses, source and destination ports, protocols, flow direction, payload sizes, and packet counts of the traffic flows it wishes to detect. In turn, each of these fields can be represented by some number of leading bits shared between the upper and lower bounds of the field. For example, a rule with port range [25-30] can be represented in binary as [0b00011001-0b00011110] thus producing a longest prefix match of 0b00011xxx.

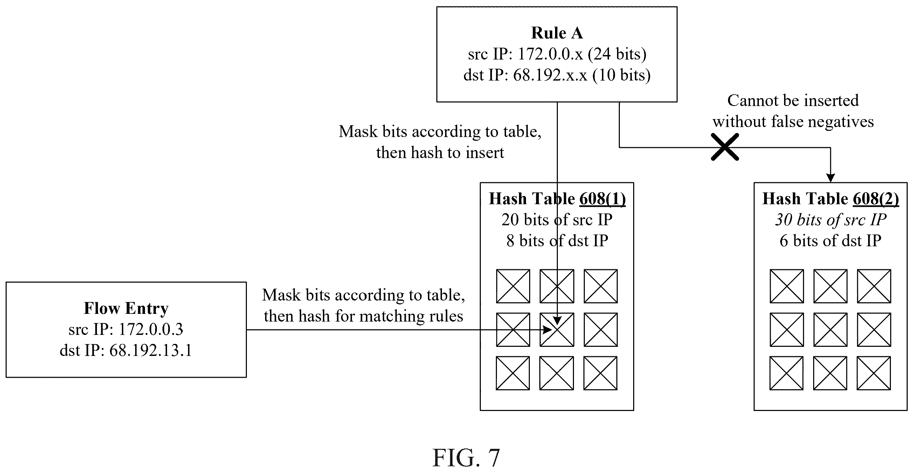

These prefix masks are used to place IDS rules 320 into hash tables 608 that specify the number of leading bits used from each field. Rules may only be placed into a hash table using a lesser or equal number of bits from each field than itself. For example, a rule with the source port field 0b00011xxx may be placed into a hash table using only the leading 4 bits of the source port, thereby reducing the prefix match instead to 0b0001xxxx. This may introduce some false positives (e.g., a flow with 0b00010xxx will make it through), but guarantees that no false negatives occur. The hash table 608 only serves as a filter for the full matcher, so such false positives only minimally impact performance, and not accuracy. An example is shown in FIG. 7.

FIG. 7 shows rule insertion and flow matching using hash tables 608. This example shows how the flow matcher 304 can handle hash collisions. While increasing the size of the hash table is sometimes sufficient for mitigating hash collisions, by determining the number of bits used from each field based on the table's definition, sometimes collisions are inevitable. For example, for purposes of explanation, consider a hash table that uses 0 bits of every field, the hash will always produce the same result. This allows the conclusion that the presence of many hash collisions indicates that the given hash table is too general, in that it uses too few bits of each field, resulting in frequent collisions.

These cases present an opportunity to split its colliding entries into a new hash table. This new hash table would be defined more strictly than the original, using as many bits of each field as possible while still encompassing the colliding rules. By producing a new hash table using different numbers of bits from each field, the colliding rules also receive new hash values, distributing them throughout the new table.

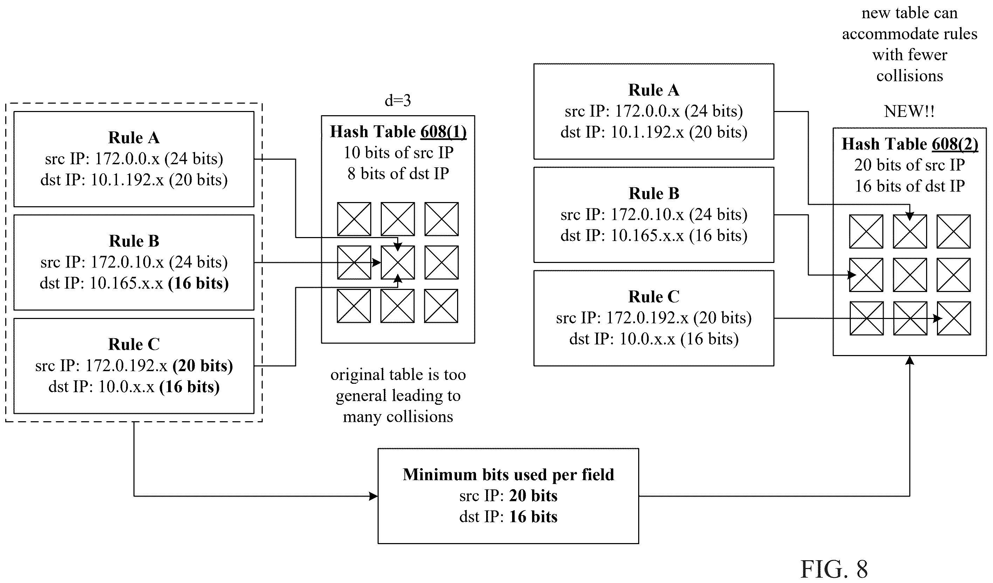

To this end, a collision threshold variable d can be defined to track the number of collisions at each hash location. If the number of collisions at any hash location exceeds d, the process iterates through the collisions to determine the minimum number of leading bits used by each field of the colliding rules. If all values happen to be equivalent to those used by the original hash table, the mean value of the field with the largest range is used instead to prevent the new hash table from being defined equivalently to the existing one (and thus retaining the collisions). The colliding rules are then moved to the new table from the original table. An example of how this is done is provided in FIG. 8.

FIG. 8 shows how colliding rules are used to create a new hash table with stricter definitions. Some versions could feasibly implement the flow matcher 304 using just the description above, however, the performance may be below expectations. The cause of this low performance lies in the packet and byte counter fields. Expressing ranges using a longest prefix match is helpful when the probability of each value appearing is relatively uniform. In the earlier example, the port range [25-30] is expanded to [24-31] as a result of the longest prefix match process, producing a 25% false positive rate for this rule, assuming uniform distribution. These false positives will be easily filtered out by the full matcher at little cost to performance. However, one key insight is that this uniform distribution assumption does not hold for packet or byte counts. For example, a rule matching to flows with 10,000+ packets should match very infrequently. Assuming the packet count is maintained using a 16-bit integer, this produces the range [10000-65535], which has no longest shared prefix as the most significant bits of the bound values differ. As a result, the rule will end up accepting any packet count value to prevent false negatives. Unlike port values which (broadly speaking) may appear in a relatively uniform distribution, the same cannot be said for packet (or byte) counts. Flows with 10,000+ packets are extremely rare compared to flows with fewer than 10,000 packets, despite the fact that [10000-65535] constitutes a larger portion of the range of valid values. This is problematic because a rule that should match very infrequently will suddenly start matching to *all* flows.

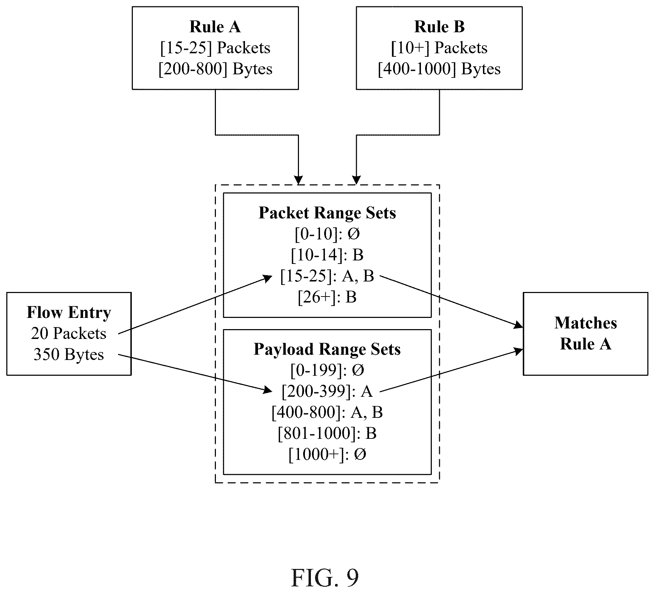

To resolve this issue of overgeneralization, KnowCheck implements recursive flow classification to check the packet and byte counter fields. All rules sharing the same header fields (i.e., IP, port, protocol, and direction fields) but differing packet and byte ranges are stored in the same "unitrule" in the hash tables. Each unitrule then breaks down the range of possible values for these fields based on the set of rules they would match. For example, presume rules A and B fall into the same unitrule, but rule A wishes to match flows with [100-200] packets, whereas rule B wishes to match flows with [150-300] packets. The process then breaks down the packet count into ranges [0-99] matching neither rule, [100-149] matching only rule A, [150-200] matching rules A and B, [201-300] matching only rule B, and [301+] matching neither. This allows flows to rapidly evaluate all rules in a given unitrule simultaneously, while saving memory on their shared header fields. An example is provided in FIG. 9.

FIG. 9 shows how recursive flow classification evaluates fields for multiple rules simultaneously using range sets. Recursive flow classification does not produce any false positives. Therefore, the only false positives at this point were generated by the hash tables. Thus, the full matcher only checks the flow log's source and destination IPs, source and destination ports, protocol, and flow direction fields against the original rule definitions before labeling each flow with its matching rule IDs. With this, all entries in the network flow log should be labeled with their prospective matches to the translated ruleset. Unfortunately, the issue of information loss through the translation process is still present, so the process cannot take all of these rule matches at face value without raising many false alarms. This is handled by the rule distribution model 306, which is explained below.

Not all rule matches are created equal, as each of the potentially thousands of rules has varying amounts of information loss from the translation process. While some rules may remain mostly intact, others may become extremely general, such as matching all flows with more than five packets. One key insight is that instead of directly using rule matches to raise alarms, the present solutions can instead use them to inform which IPs within the network are statistically most likely to produce a match in the original, untranslated ruleset. This allows the process to dynamically select the placement of V-taps throughout the internal network in response to changing traffic patterns and conditions, eliminating false positives produced by the translation process by returning the responsibility of raising alarms back to the IDSes.

This introduces the possibility of false negatives, so the presnt solutions can optimize node selection as much as possible. KnowCheck achieves this by representing the IP addresses in the internal network as nodes in a directed graph, and the flows as directed edges between nodes. The likelihood that each flow is malicious can then be represented as a weight on its corresponding edge, and the utility of placing a V-tap on each IP address is equal to the sum of the weights of its node's adjacent edges. The solutions can perform this utility computation and node selection process periodically, while continuously updating the graph based on the incoming flow logs. This process is detailed in Algorithm 1.

---

### Algorithm 1 KnowCheck Rule Distribution Model

---

1:   $p$: Period of time between new V-tap selections

2:   while True do

3:       Record current window rule matches

4:       for every $p$ seconds do

5:          Compute edge weights

6:          Select new V-taps

7:          Advance to next sliding window

8:       end for

9:   end while

---

The description now turns to node utility and V-tap selection. As previously described, each node within the network receives a utility value based on the likelihood that its adjacent edges are passing malicious traffic. Naively, one might simply select the nodes with the highest utility. However, it is important to note that each edge is considered adjacent to both its source and destination nodes, contributing to the utility value of both simultaneously. As a consequence, if a particular edge is very likely to have malicious traffic and thus produce a high weight, both its source and destination nodes will reflect a high utility value and be selected despite being informed by the same edge.

One key insight is that by iteratively selecting nodes for V-tap, and removing the weights of adjacent edges, the technical solution can (potentially) maximize the total utility covered by V-taps. In addition, by maintaining probes which detect malicious traffic for the following period, the process can ensure that multi-period attacks continue to be detected.

Some implementations can employ a sliding window of network traffic. The illustrated V-tap selection algorithm relies on having an accurate representation of the probability of malicious traffic in the edge weights of the graph. The process can have a set of rule matches for each flow as an output from the flow matcher 304, but discerning which information is important presents a challenge. For example, if the process naively weighs each edge based on the total number of rule matches, the process loses the key context of how much traffic is passed by each flow. Conversely, if the process solely weights each edge by the volume of traffic being passed through, the process loses the ability to select the set of rules to deploy the V-taps with, as well as potentially missing out on information provided by rules with little translation error. A goal of the present concepts is to leverage as much information as possible in the decision, including both rule matches and the traffic volume, without giving too much weight to rules that do not provide much useful information.

One key insight is that the definition of normal traffic in the internal network can vary drastically between pairs of nodes. For example, node A may typically send short flows to node B, whereas node B may respond with large, long flows, such as in the case of remote memory access. In this case, a long flow from A to B would be abnormal, as would a short flow from B to A. Additionally, flows that appear normal by volume but match to completely new sets of rules or access new ports can also be considered abnormal. The model takes all of this into consideration by maintaining a per-flow, per-rule history of observed network traffic over sliding time windows of size p.

The description now turns to abnormality score. Intuitively, the abnormality score of a given flow-rule pair should represent how likely the flow in question was to match to the rule. The process does this by comparing the current window's traffic volume against the past window flow associated with this rule. In particular, the process computes the z-score of the packet and byte counters against past windows, i.e., the current window's number of standard deviations away from the mean over past windows.

Both the packet and byte counters receive a z-score ($z_{r,p}$ and $z_{r,b}$ respectively), as both have the potential to influence the abnormality score. However, as increases in z-score become more significant the higher they go (e.g., roughly 32% of data lies outside 1 $\sigma$ of the mean, whereas only 1% lies outside 3 $\sigma$ of the mean), the process chooses to use the higher of the z-scores rather than summing them. For the same reason, scores below 1 are considered insignificant and thus are discarded.

In certain cases, the z-score cannot be computed. For example, z-score cannot be computed if no history exists for a flow-rule pair, or if all past values in the history are the same. In these cases, the process can draw upon a global sense of normal traffic for comparison. To this end, the model also maintains a sliding window history by port-rule pair using the important (lower) port of each flow. If this global rule mapping is also incapable of producing a z-score, a large fixed score of s is assigned instead, denoting that the flow is completely new and should be inspected.

Lastly, to ensure traffic volume plays an essential part in an edge's weight, each edge also tracks the largest flows by packet and byte count for each window, producing another z-score $z_e$. Each edge's weight should represent the likelihood that any of its constituent flows are malicious, and as such is equal to the sum of this volume z-score $z_e$, and each of its flow-rule z-scores $z_r$.

The description now turns to functions performed by the rule pruner 308. After selecting nodes to tap, KnowCheck orchestrates V-taps to the nodes and deploys an IDS. On the tapped nodes, KnowCheck aims to run the IDS with minimal performance degradation while ensuring that the IDS does not miss detecting any attacks. To achieve this, KnowCheck uses a specially designed rule set unlikely to be triggered and that consumes significant CPU resources when checked. This approach requires KnowCheck to consider two factors for each rule: the potential false negative rate (i.e., the number of missed attacks due to pruning the rule) and the cost of evaluating the rule. In some implementations, KnowCheck then models the problem as a knapsack optimization: Given a set of n rules, each with an associated cost ($cost_i$) and false negative rate ($f_i$), and a maximum allowable false negative rate (F), the goal is to remove certain rules (e,g,. $r_n = 1$) in a way that:

$$\text{maximize} \quad \sum_{i=1}^{n} cost_i r_i$$

subject to

$$\sum_{i=1}^{n} f_i r_i \leq F$$

$$r_i \in \{0,1\}, \quad \forall i \in \{1,2,\dots,n\}$$

Rules are independent, so the false negative rate of all pruned rules is the sum of the false negative rate of each individual pruned rule. To solve the optimization problem, the techniques can employ the standard dynamic programming algorithm. The key is to define the two factors for each rule: (i) false negative rate, and (ii) cost, which is discussed in the following sections.

The description now turns to the rule false negative rate. The process aims to determine the percentage of misdetected attacks when pruning a specific rule. This presents a challenge because the prior distribution of attack traffic is unknown. However, access to benign traffic allows the process to model normal traffic behavior as a random variable and estimate its prior distribution, which can then be used to predict the likelihood of new data points. The rule distribution model assigns a score $s \in [0, \infty)$ to each rule, representing the deviation of current traffic volume matching the rule, compared to historical traffic volumes. A higher score s indicates a greater deviation. Different flow volumes result in different deviations from the historical data, leading to varying scores for each rule. During the setup phase, KnowCheck models a prior distribution using the deviation scores from normal traffic. In the deployment phase, given a new deviation score, it can estimate the likelihood of that score occurring in normal traffic. Additionally, KnowCheck can update the prior distribution continually during deployment, adjusting for distribution shifts when the IDS reports no attacks in the traffic. Specifically, KnowCheck fits deviation scores for normal traffic $s_i$ to a log-normal distribution by estimating the log-normal parameters $\hat{\mu}$ and $\hat{\sigma}$ using maximum likelihood estimation (MLE).

$$\hat{\mu} = \frac{\sum_{i=1}^{n} \ln(s_i)}{n} \qquad \hat{\sigma}^2 = \frac{\sum_{i=1}^{n} (\ln s_i - \hat{\mu})^2}{n}$$

where n is the number of normal traffic scores used for modeling. Given a new score s, the probability of its occurring in the normal traffic is defined by the probability density function (PDF) for the log-normal distribution:

$$PDF: P(s) = \frac{1}{s\hat{\sigma}\sqrt{2\pi}} e^{-\frac{1}{2}\left(\frac{\ln(s)-\hat{\mu}}{\hat{\sigma}}\right)^2}$$

For a rule, if the probability of its deviation score occurring in the normal traffic is low, the probability of the rule being triggered is high. Furthermore, the probability of a rule being triggered can also incorporate prior knowledge about east-west traffic, such as current running services, vulnerable devices, and past attacks. Since rules have different targets, such prior knowledge gives rules different significance. However, in the general methodology, the process makes no assumptions on prior knowledge. Instead, the process estimates the probability of a rule being triggered as solely the inverse of the probability of its score.

$$P(rule) = 1 - P(s)$$

For each $rule_i$ in a ruleset of n rules (e.g., $i = 1,2,..., n$), the process models $rule_i$ is triggered or not as a random variable, thus its expected value is equal to $P(rule_i)$. If the process prunes $rule_i$, the false negative rate it introduces if removed is

$$f_i = \frac{P(rule_i)}{\sum_{j=1}^{n} P(rule_j)}$$

The description now turns to rule cost. In light of the profile analysis described above, the process can define rule cost groups including different types of rules that are expensive to check: (a) Rules that do not specify packet directions in a flow; (b) Rules that apply to response packets in a flow; (c) Rules that do not specify payload fields; and (d) Rules that apply to HTTP response or file data in the payload. Rules in groups (a) and (b) require checking response packets sent by the server, which typically contain large payloads, making them expensive to evaluate. Rules in groups (c) and (d) examine fields in the payload that also contain large amounts of data, leading to high cost. In some implementations, each cost group is assigned the same cost, and each rule within a group receives a cost that is proportional to the total number of rules in that group. This is based on the observation that the overall cost increases linearly with the number of rules. For rules that do not belong to any of the groups, a small cost is assigned.

KnowCheck was evaluated using three datasets: (i) Yatesbury dataset, which represents east-west datacenter traffic, (ii) HyperVision, which covers 80 different attack types, and (iii) Stratosphere, which provides packet traces for end-to-end evaluation. KnowCheck's performance is compared to five baseline algorithms: (i) NetVigil, an existing anomaly detector for east-west traffic, (ii) random, which selects probe locations at random to serve as a control group, (iii) Greedy-flows, which places probes at the IP addresses with the most flows entering or leaving, (iv) Greedy-pkts, which places probes at IP addresses with the most packets entering or leaving, and (v) Greedy-bytes, which places probes at IP addresses with the most bytes entering or leaving. Each of these algorithms are evaluated using two metrics: recall, which reflects the algorithm's model to detect malicious traffic within the network, and cost, which evaluates the effectiveness of the rule pruner. KnowCheck achieves 15% lower cost per tap, and up to 3.9x lower cost to achieve 95% recall compared to the other baselines.

The testing examines existing IDSes and their challenges for widespread east-west traffic deployment, then analyzes the primary obstacle, cost, in more detail. There are multiple challenges to IDSes for east-west traffic. IDSes are critical components of network security, with extensive research and numerous open-source and commercial solutions available in this domain. As mentioned above, most of these solutions are primarily designed to secure the network perimeter. These existing techniques and their challenges are summarized below.

Rule-based IDSes, particularly software-based solutions such as Snort, Zeek, and Suricata, are widely deployed to secure north-south network traffic. These systems detect threats in near real-time by leveraging expert-crafted rules that integrate 5-tuples and attack signatures. The key advantage of these systems is their 'full explainability,' as each detection is directly linked to a specific rule that explicitly describes the attack type. This transparency enables operators to automatically and immediately respond to high-confidence, high-risk threats by blocking or quarantining offending network flows. However, the need to inspect every network packet imposes significant operational costs. To mitigate these costs, considerable efforts have been directed toward optimizing these systems, including leveraging SIMD instructions and deploying specialized hardware such as FPGAs. While hardware accelerators can deliver substantial cost savings, they often lack the flexibility required to update rulesets for emerging attacks or tailored use cases.

Despite significant efficiency advancements, deploying rule-based IDSes at the scale of east-west traffic in public clouds remains economically prohibitive. For example, securing 1 Petabit/second of traffic would require approximately 500K CPU cores for software-based solutions, leading to exorbitant operational costs-a challenge further exacerbated by the rise of high-bandwidth workloads such as large language models (LLMs). Moreover, east-west traffic lacks centralized bottleneck links, making it impractical to redirect or mirror all traffic across every layer, including intra-node traffic between virtual machines. This approach would not only introduce substantial configuration complexity but also place immense pressure on network bandwidth. Commercial solutions attempt to address this challenge by deploying rule-based IDSes in a distributed manner (e.g., within hypervisors). However, the associated costs remain prohibitively high.

The next category relates to ML- or anomaly-based IDSes. Another widely studied approach that complements rule-based solutions is the use of statistical or machine learning (ML) algorithms to detect malicious activities. These approaches leverage either supervised or unsupervised learning to train models, with several studies focusing on reducing operational costs by deploying these models on programmable switches. A key advantage of ML-based approaches is their ability to detect previously unknown (zero-day) attacks. Recent work demonstrates that these methods can operate on low-cost flow summaries in public clouds, enabling threat detection without the overhead of mirroring network packets.

Despite these advantages, ML- and anomaly detection-based solutions face fundamental challenges, particularly at the scale of east-west traffic in public clouds. First, they are sensitive to legitimate workload changes, often resulting in false positives. This issue is exacerbated by the dynamic nature of elastic resource allocations in cloud environments. More critically, these approaches suffer from poor explainability. Even with advancements in ML interpretability, operators can typically only understand 'why' a flow was flagged (e.g., the inter arrival time between packets is abnormal) but lack insight into 'what' specific malicious activity is occurring. Consequently, these solutions primarily report findings to dashboards, relying on human experts to validate threats. This reliance introduces significant latency and contributes to alert fatigue, reducing the effectiveness of these systems in mitigating threats in a timely manner.

The description now turns to analysis of cost for rule-based IDSes. Running IDSes for east-west data center traffic is particularly challenging because of the distributed manner of network nodes with equally high volumes of traffic. It is infeasible to deploy an IDS when there is a need to scale it to multiple machines. Therefore, some of the present concepts include insights for improving IDS running efficiency.

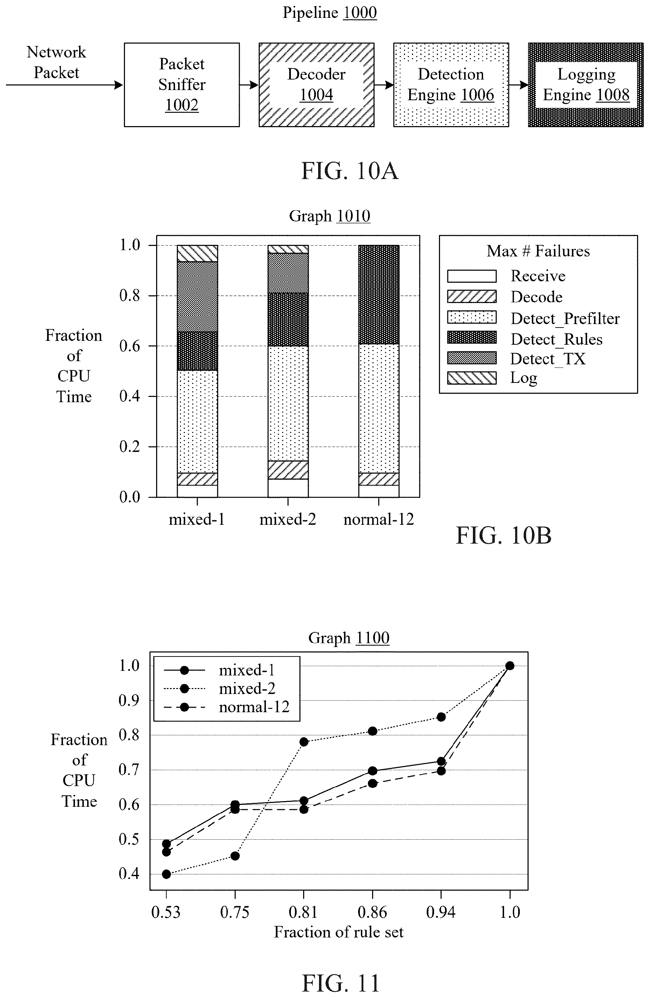

As shown in FIG. 10A, some versions of IDSes consist of four components in their execution pipeline 1000. The components include a packet sniffer 1002 that captures packets from network ports or Pcap files, a decoder 1004 that tracks flows, reassembles, and parses packets, a detection engine 1006 that matches packets against signatures, and a logging engine 1008 that records alerts. The detection engine 1006 mainly includes three processes. First, the detection engine prefilters to match packets with only one preliminary pattern in each rule (detect_prefilter). When at least one prefilter pattern matches, the detection engine checks the complete rule against packets (detect_rule). When a network packet is matched, the detection engine checks stateful stream (detect_tx).

FIG. 10B shows a graph 1010 that illustrates the fraction of CPU time spent on each task of pipeline 1000 of FIG. 10A. The fraction relates to CPU time spent on each task for benign and mixed packet traces. The detection engine 1006 accounts for 78% of the total CPU time.

The goal of the detection engine 1006 is to identify network packets that trigger any of up to tens of thousands of signatures, also referred to as rules. Each signature specifies one or more patterns and is triggered when all patterns match. These signature patterns can be classified into three categories entailing packet header match, payload header match, and string match. Packet header match involves a pattern over the packet 5-tuple and direction within the flow (e,g,. 'all response traffic from 172.0.0.2/24 port 80'). Payload header match involves a pattern over application layer fields (e,g,. 'HTTP file data'). String match involves an exact match string or a regular expression within the packet payload.

To deploy IDSes with scalability, previous techniques involved optimizations for string matching modules by leveraging specialized data structures and hardware. However, they require substantial development costs and effort from operators. The present concepts provide a technical solution that optimizes the rules being used without compromising security. One insight is that not all rules have the same cost due to different combinations of packet and payload header patterns. Implementations of the present conepts can categorize a set of 36,000 rules into groups based on header patterns, and remove groups of rules to analyze the resulting CPU time of running Suricata. The rules with fewer restrictions on packets require checking more of the payload across more packets, which constitutes a significant portion of the total CPU time.

FIG. 11 shows a graph 1100 of CPU time over rule set fraction. The graph 1100 shows a substantial reduction in CPU time in the detection engine by removing only a small number of rules. In this case, 6% of rules do not specify packet direction and payload header, which need to check the whole payload across all packets in a stream. Removing the 6% of rules reduces CPU time by 15% to 30%. Further removing another 8% of rules that check the HTTP response or file content can reduce CPU time by up to 35%.

Besides different costs among the rules, rules can have different likelihoods to be triggered because rules target different services (e,g,. SQL server/web server), different products (e,g,. web browsers/operating system) with different severity (e,g,. system compromise/activity profiling). Considering rules' applicability and their costs, IDS run-time can be boosted by removing rules that are unlikely to be triggered and costly to evaluate.

As explained above, the scale, complexity, and dynamic nature of east-west traffic poses significant challenges for achieving comprehensive intrusion detection with existing rule-based, ML-based, or anomaly-based solutions. An effective solution should address three critical requirements: (1) minimize operational costs, particularly those associated with network packet inspection; (2) introduce minimal additional network traffic; and (3) deliver fully explainable and highly precise threat detection to enable automated and immediate threat mitigation. These requirements form the foundation of the design principles employed by KnowCheck to provide technical solutions to these and other technical problems.

The description now explains the testing methodology. KnowCheck was tested using three separate datasets spanning different settings and methods. First, flow logs were reproduced for five attack patterns described in the Yatesbury dataset using a 16-VM scale set. These attacks include a vertical port scan, stealth port scan, UDP DDoS, DNS amplification, and infection monkey. Flow logs were collected from the generated packet traces every 60 seconds. Among the five attacks, scanning and infection monkey attacks trigger 35 Suricata rules. In contrast, the reproduced DDoS and DNS attacks do not correspond to any IDS rules because they do not contain specific strings in the payload required by the rules. Second, the Hypervision dataset provides packet header information and labels for 80 different attack types. However, this dataset is a north-south traffic trace, and thus requires some adaptation to more accurately reflect an east-west traffic setting. The third dataset relattes to packet traces from the Stratosphere dataset: CTU Mixed-Capture-1 and CTU-Normal-12. These are referred to as mix-1 and norm-1, respectively. Although the Stratosphere traces are not east-west traffic, they include packet payloads which allows evaluation of IDS performance.

The flow matcher was run with the Suricata ruleset of 30000 rules, hash table size of 10009, and a collision threshold of $d = 8$. The rule distribution model uses a sliding window period of $p = 60$ seconds, with a base abnormality score of $s = 50$. The datasets Yatesbury, Hypervision, and Stratosphere are generated as explained below.

The Yatesbury dataset already adapts flow logs, and represents an east-west traffic setting so no changes are needed.

The Hypervision dataset was chosen for its breadth of attack types, however it imposes some key limitations. First, the dataset does not contain packet contents, thus the process relies on the provided labels instead of generating them with the baseline IDS. Consequently, there is no guarantee that the provided labels would have exactly matched the ones generated by the test ruleset. Secondly, this dataset is a north-south traffic trace, and so must be adapted to fit an east-west setting. The normal network traffic should reflect an east-west setting, so Yatesbury's normal dataset was used as the baseline. From there, the malicious flows were extracted from the Hypervision dataset, and the IP addresses were replaced with east-west addresses before injecting them into the Yatesbury normal set. Because KnowCheck's design hinges on having a period of normal traffic to establish a baseline, one hour of normal traffic is taken from Yatesbury normal, after which Hypervision's malicious traffic is interleaved with the normal traffic for a single time window (one minute), and for ten consecutive time windows (ten minutes). After this period, two extra time windows (two minutes) of normal traffic are added.

The process starts the original trace in Stratesphere and runs Suricata-8.0.0 as the IDS. But the results are generalizable to other IDSes because they are optimized in a similar way.

KnowCheck is evaluated against five baseline node selection algorithms, including NetVigil, Random, Greedy-flows, Greedy-pkts, and Greedy-bytes.

NetVigil is an anomaly detector for east-west traffic. But it aims to detect malicious edges without identifying which rules can be triggered. The process therefore adapts NetVigil to perform tapping node selection. NetVigil was trained using normal traffic. For attack traffic, anomaly scores were obtained for every edge, which are used to get aggregated scores for each node and select tapping nodes with the highest anomaly scores.

In relation to the random aspect, V-tap locations are randomly shuffled at the start of each time window.

In relation to Greedy-flows, the V-tap set is the set of the IP addresses sending and receiving the highest number of flows in each time period. Taps which detect malicious traffic are kept for the following period.

In relation to Greedy-pkts, the V-tap set is the set of the IP addresses sending and receiving the highest number of packets in each time period. Taps which detect malicious traffic are kept for the following period.

In relation to Greedy-bytes, the V-tap set is the set of the IP addresses sending and receiving the highest number of bytes in each time period. Taps which detect malicious traffic are kept for the following period.

Two evaluation metrics were used to evaluate KnowCheck: (i) recall to evaluate node tapping selection, and (ii) cost to evaluate rule pruning. Recall is equal to true positives divided by true positives plus false negatives, and in this context is a measure of the percent of malicious edges detected. A true positive is defined as being edges for which malicious traffic passed through while either of its adjacent nodes were tapped for each period. Conversely, a false negative is defined as edges for which malicious traffic passed through while neither of its adjacent nodes were tapped for each period.

It is important to note that because this design is reactive rather than proactive, the first appearance of malicious traffic for each experiment is ignored as no information was present then for the model to react to. Additionally, the single-window Hypervision traces only present the malicious traffic a single time, and thus are used to measure the model's ability to react to new unseen attacks in the network. As such, in those experiments, a probe being placed on a node after the malicious traffic is also counted as a true positive.

The process also includes the cost of tapping, which is measured as the number of taps multiplied by the CPU time to run the IDS. Rule pruning reduces the size of the ruleset, thereby reducing the CPU time, and consequently reducing the cost as well. Rule pruning is also only possible using KnowCheck, and not by any other baseline evaluated. For rule pruning, the process uses both the false negative rate of rule-triggering and CPU time as primary metrics.

The description now turns to end-to-end performance of the tested implementations. The process first evaluated the cost of node tapping using KnowCheck-pruned ruleset with a target false negative rate of 0 (i.e., no misdetection of attack) compared to using a full ruleset. Across multiple traces, the average CPU time of running the IDS using KnowCheck is 15% lower due to rule pruning.

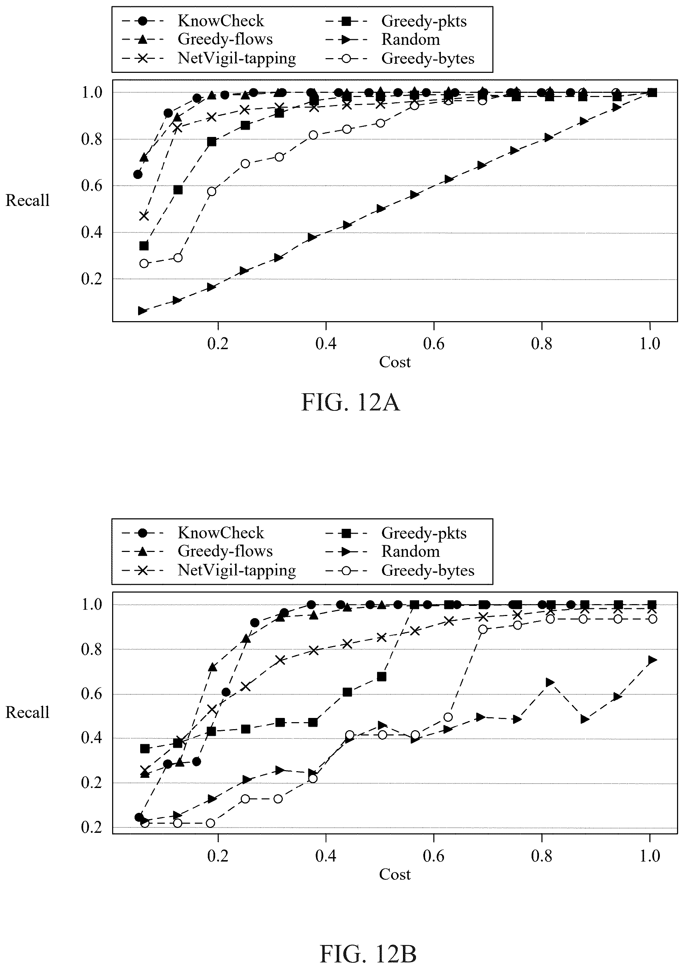

FIGS. 12A and 12B collectivley show recall scores under different costs. FIGS. 12A and 12B show recursive flow classification evaluation fields for multiple rules simultaneously using range sets. FIG. 12A relates to the Hypervision dataset and FIG. 12B relates to the Yatesbury dataset.

The cost stands for the fraction of nodes tapped among the total of 16 nodes. In Hypervision data of FIG. 12A, KnowCheck outperforms Greedy-flows and NetVigil-tapping by 3% given two nodes to tap, and others by 88%. In Yatesbury data with fewer than three nodes to tap, KnowCheck has a lower recall compared to baselines as there are nodes with similar scores. Greedy-flow performs similarly to KnowCheck in Yatesbury data of FIG. 12B, this is because most of the attacks involve volumetric attacks which benefit the recall for Greedy-flow.

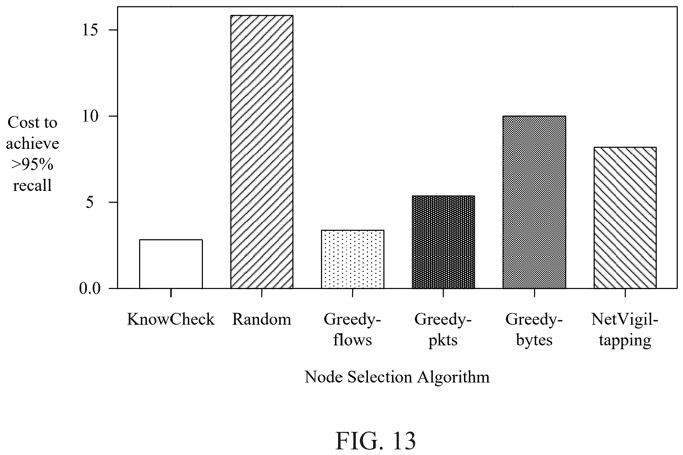

FIG. 13 illustrates the number of nodes to tap in order to achieve 95% recall in Hypervision data of FIG. 12A. KnowCheck is able to use six fewer taps on average due to node selection. In terms of running throughput, average latency introduced by the KnowCheck flow matcher 304 and rule distribution model 306 is 10.4 seconds per minute of flow logs across all 80 Hypervision traces.

The discussion now turns to performance of the rule pruner 308. This section analyzes the impact of the rule pruner on the CPU time of running the IDS using Stratesphere packet traces, as well as the false negative rate (FNR) of attack detection. The process begins by varying the target FNR as an input to the rule pruner that specifies the allowable attack misdetection rate. By increasing the target FNR, KnowCheck is able to prune more rules that are expensive to evaluate.

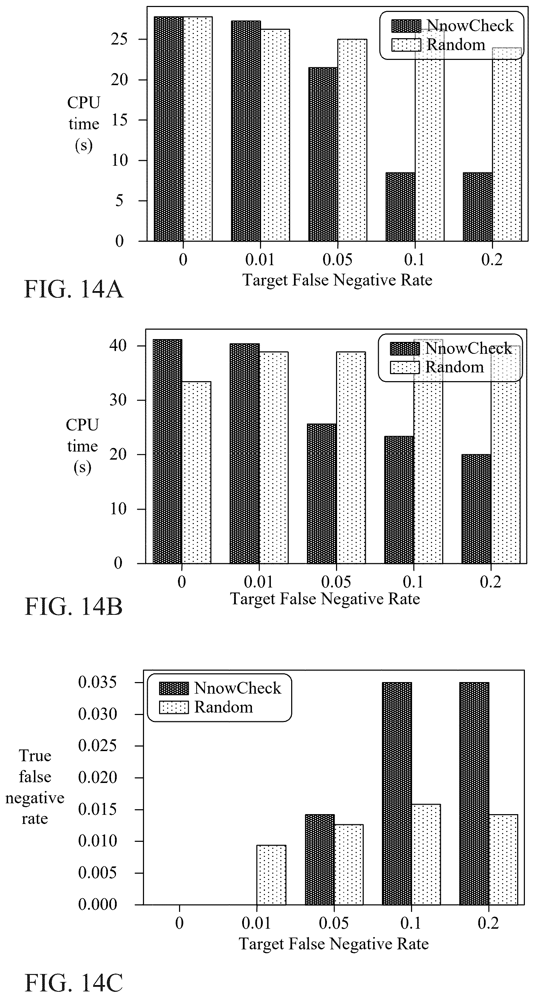

FIG. 14A demonstrates that the CPU time for running the IDS on a normal trace is reduced by up to 70% when KnowCheck prunes more rules. Notably, it can achieve 23% saving on CPU usage while ensuring the FNR remains below 5%. As a comparison, when the process randomly prunes the same number of rules, no reduction in CPU time is observed, as expensive rules remain in the ruleset. This highlights that KnowCheck's rule pruning algorithm, which focuses on removing only the costly rules, improves IDS performance.

FIG. 14B shows the results for attack traces, where the CPU time is reduced by 40% when the target FNR increases from 1% to 5%. The CPU time plateaus after a 5% target FNR, as the remaining rules have high FNRs and cannot be pruned further without exceeding the target threshold.

Next, the process tests the number of pruned rules that must still be evaluated to detect attacks, which corresponds to the true FNR. FIG. 14C shows that the true FNR increases as the target FNR increases and KnowCheck prunes more rules. However, the true FNR never exceeds the target FNR, demonstrating the guarantees of the rule pruning module in attack detection performance. In contrast, randomly pruning rules may remove rules that are crucial for detecting attacks, even when the number of rules is close to the full ruleset.

KnowCheck offers a novel and efficient security framework designed to address the unique challenges of securing east-west traffic in public cloud environments. By combining flow-level rule matching, guided traffic inspection via a rule distribution model, and dynamic rule pruning for packet-level IDSes, KnowCheck achieves near real-time threat detection with minimal operational cost and full explainability. Evaluation with a wide range of attacks demonstrates that KnowCheck significantly reduces costs while maintaining high recall. With its configurable trade-offs between cost and threat coverage, KnowCheck provides a scalable and practical solution for safeguarding east-west traffic, paving the way for more secure and cost-effective cloud infrastructures.

EXAMPLE SYSTEM

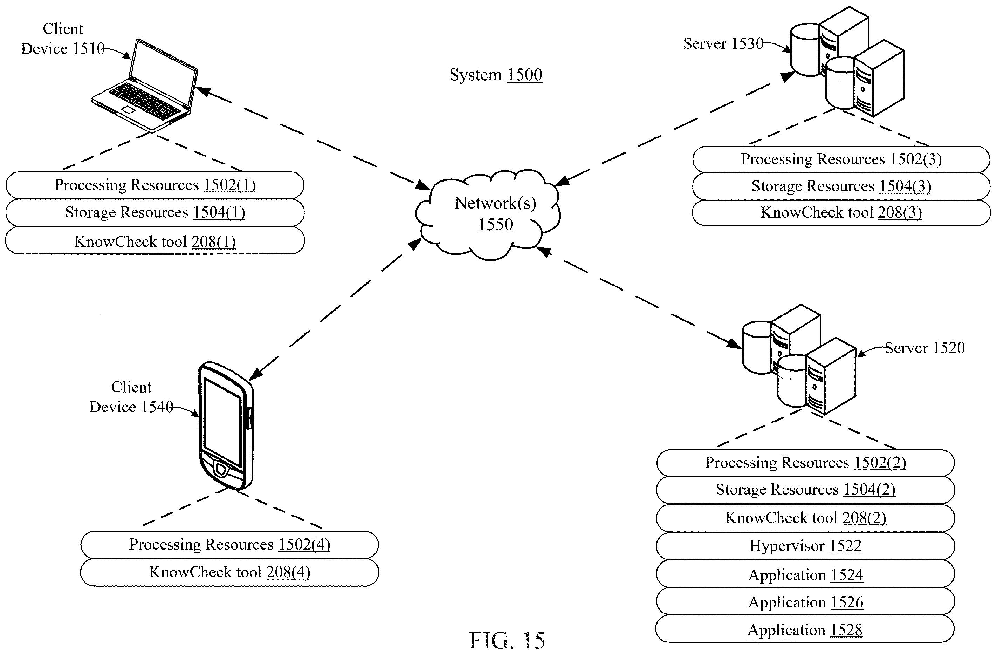

The present implementations can be performed in various scenarios on various devices. FIG. 15 shows one example system 1500 in which the present implementations can be employed, as discussed more below.

As shown in FIG. 15, system 1500 includes a client device 1510, a server 1520, a server 1530, and a client device 1540, connected by one or more network(s) 1550. Note that the client devices can be embodied both as mobile devices such as smart phones and tablets, as well as stationary devices such as desktops, server devices, etc. Likewise, the servers can be implemented using various types of computing devices. In some cases, any of the devices shown in FIG. 15, but particularly the servers, can be implemented in data centers, server farms, etc. Network(s) 1550 can include, but are not limited to, internal network 102 and external network 106, discussed above with respect to FIG. 1.

Certain components of the devices shown in FIG. 15 may be referred to herein by parenthetical reference numbers. For the purposes of the following description, the parenthetical (1) indicates an occurrence of a given component on client device 1510, (2) indicates an occurrence of a given component on server 1520, (3) indicates an occurrence on server 1530, and (4) indicates an occurrence on client device 1540. Unless identifying a specific instance of a given component, this document will refer generally to the components without the parenthetical.

Generally, the devices 1510, 1520, 1530, and/or 1540 may have respective processing resources 1502 and storage resources 1504, which are discussed in more detail below. The devices may also have various modules that function using the processing and storage resources to perform the techniques discussed herein. The storage resources can include both persistent storage resources, such as magnetic or solid-state drives, and volatile storage, such as one or more random-access memory devices. In some cases, the modules are provided as executable instructions that are stored on persistent storage devices, loaded into the random-access memory devices, and read from the random-access memory by the processing resources for execution.

Any of client devices 1510 and 1540 and servers 1520 and 1530 can include an instance of KnowCheck tool 208, respectively. The KnowCheck tool can include any of ruleset translator 302, flow matcher 304, rule distribution model 306, and/or rule pruner 308 of FIG. 3 and/or the virtual tapping controller 408 of FIG. 4. From another perspective, the KnowCheck tool 208 can be configured to accomplish any or all of the KnowCheck concepts described herein. Note that while the illustrated implementation includes an instance of KnowCheck tool 208 on each device, other implementations are contemplated. For instance, another implementation can utilize a single KnowCheck tool instance to cover all or a subset of the nodes (e.g., devices) within a network. Another example implementation can run an instance of KnowCheck within a programmable network switch or smart NICs, among other configurations.

Server 1520 can host a hypervisor 1522, which can provide virtual machines for running applications 1524, 1526, and 1528. For example, server 1520 is one example of a cloud resource that can be implemented on a server rack in internal network 102 (FIG. 1). Each application can be a tenant within a data center.

As noted above with respect to FIG. 15, system 1500 includes several devices, including client device 1510, server 1520, server 1530, and client device 1540. As also noted, not all device implementations can be illustrated and other device implementations should be apparent to the skilled artisan from the description above and below.

The term "device," "computer," "computing device," "client device," and/or "server device" as used herein can mean any type of device that has some amount of hardware processing capability and/or hardware storage/memory capability. Processing capability can be provided by one or more hardware processors (e.g., hardware processing units/cores) that can execute computer-readable instructions to provide functionality. Computer-readable instructions and/or data can be stored on storage, such as storage/memory and/or the datastore. The term "system" as used herein can refer to a single device, multiple devices, etc.

Storage resources can be internal or external to the respective devices with which they are associated. The storage resources can include any one or more of volatile or non-volatile memory, hard drives, flash storage devices, and/or optical storage devices (e.g., compact discs, digital versatile discs, etc.), among others. As used herein, the term "computer-readable media/medium" can include signals. In contrast, the term "computer-readable storage media" excludes signals. Computer-readable storage media includes "computer-readable storage devices." Examples of computer-readable storage devices include volatile storage media, such as RAM, and non-volatile storage media, such as hard drives, optical discs, and flash memory, among others.

In some cases, the devices are configured with a general-purpose hardware processor and storage resources. In other cases, a device can include a system on a chip (SOC) type design. In SOC design implementations, functionality provided by the device can be integrated on a single SOC or multiple coupled SOCs. One or more associated processors can be configured to coordinate with shared resources, such as memory, storage, etc., and/or one or more dedicated resources, such as hardware blocks configured to perform certain specific functionality. Thus, the term "processor," "hardware processor" or "hardware processing unit" as used herein can also refer to central processing units (CPUs), GPUs, controllers, microcontrollers, processor cores, or other types of processing devices suitable for implementation both in conventional computing architectures as well as SOC designs.

Alternatively, or in addition, the functionality described herein can be performed, at least in part, by one or more hardware logic components. For example, and without limitation, illustrative types of hardware logic components that can be used include field-programmable Gate Arrays (FPGAs), application-specific Integrated Circuits (ASICs), application-specific standard products (ASSPs), system-on-a-chip systems (SOCs), complex programmable logic devices (CPLDs), etc.

In some configurations, any of the modules/code discussed herein can be implemented in software, hardware, and/or firmware. In any case, the modules/code can be provided during manufacture of the device or by an intermediary that prepares the device for sale to the end user. In other instances, the end user may install these modules/code later, such as by downloading executable code and installing the executable code on the corresponding device.

Also note that devices generally can have input and/or output functionality. For example, computing devices can have various input mechanisms such as keyboards, mice, touchpads, voice recognition, gesture recognition (e.g., using depth cameras such as stereoscopic or time-of-flight camera systems, infrared camera systems, red-green-blue camera systems or using accelerometers/gyroscopes, facial recognition, etc.) and/or touch displays. Devices can also have various output mechanisms such as speakers, printers, displays, etc. KnowCheck tool 208 can utilize the output devices to present user-interfaces (UIs) associated with identified network security risks. For instance, the UI may include the output labels of FIG. 6 and allow the user to make risk versus resource usage decisions associated with the present concepts. The KnowCheck tool can present high risk nodes on subsequent UIs and allow the user to decide what action to take, among other configurations. In further implementations, Internet of Things (IoT) devices can be used in place of or in addition to other types of computing devices discussed herein.

Also note that the devices described herein can function in a stand-alone or cooperative manner to implement the described techniques. For example, the methods and functionality described herein can be performed on a single computing device and/or distributed across multiple computing devices that communicate over network(s) 1550. Without limitation, network(s) 1550 can include one or more local area networks (LANs), wide area networks (WANs), the Internet, and the like.

EXAMPLE METHOD

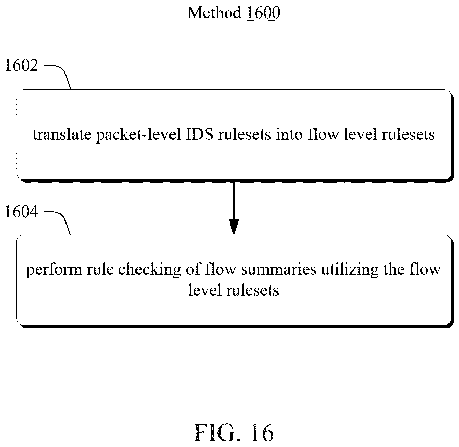

FIG. 16 illustrates an example method 1600, consistent with the present concepts. Method 1600 can be implemented on many different types of devices, e.g., by one or more cloud servers, by a client device such as a laptop, tablet, or smartphone, or by combinations of one or more servers, client devices, etc. For instance, method 1600 can be performed by an instance of KnowCheck tool 208 on servers 1520 or 1530 and/or client devices 1510 or 1540.

At block 1602, the method can translate packet-level IDS rulesets into flow-level rulesets.

At block 1604, the method can perform rule checking of flow summaries utilizing the flow-level rulesets. The checking can identify individual nodes that have a relatively high risk of being subject to an intrusion risk based upon changes in communication patterns (e.g., node behavior changes). Some implementations can employ a rule distribution model to dynamically guide IDS (or other security tool) placement to individual nodes in the trusted zone. The dynamic IDS placement selects the individual nodes with a relatively higher likelihood of intrusions based upon node behavior changes. The method can utilize a contextual-based rule pruning technique to reduce numbers of applicable packet-level rules. This reduces resource usage in the detection process and focuses on the flow rules that are more likely to properly identify high risk nodes. The method can also provide a human understandable explanation why individual nodes have a relatively higher likelihood of intrusions. In some cases, the explanation can be presented on a user-interface (UI). For instance, the method can present identified behavior changes on the UI to allow a user, such as a security analyst, to understand what actions were taken and/or which actions to take to mitigate the risk.

CONCLUSION

The widespread adoption of public cloud infrastructures has introduced significant security challenges. In particular, typical Intrusion Detection Systems (IDSes) struggle to scale to east-west (internal) network traffic and/or are hard to interpret. To tackle these challenges, the present concepts relate to KnowCheck , a novel security framework tailored for practical and widespread east-west traffic monitoring. KnowCheck translates traditional packet-level IDS rules into optimized flow-level rulesets compatible with low-cost cloud-native flow summarizers, enabling efficient and comprehensive traffic analysis. Additionally, KnowCheck employs a novel rule distribution model to dynamically identify and forward suspicious traffic for targeted deep packet inspection, ensuring accurate threat detection without unnecessary overhead. Finally, KnowCheck incorporates a dynamic rule pruning mechanism that systematically removes rules from packet-level IDSes based on probabilistic threat assessments, reducing computational costs while maintaining security effectiveness. Together, these techniques enable near real-time threat detection with full explainability and confidence, offering organizations configurable trade-offs between security coverage and operational expenditure, and equipping them to secure internal cloud communications effectively and affordably.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims and other features and acts that would be recognized by one skilled in the art are intended to be within the scope of the claims.

ADDITIONAL EXAMPLES

Various examples are described above. Additional examples are described below. One example includes a device-implemented method comprising translating packet-level intrusion detection system (IDS) rulesets into flow-level rulesets and performing rule checking of flow summaries utilizing the flow-level rulesets.

Another example can include any of the above and/or below examples where the flow summaries relate to east-west traffic between nodes in a trusted zone of a network.

Another example can include any of the above and/or below examples where the method further comprises employing a rule distribution model to dynamically guide IDS placement to individual nodes in the trusted zone.

Another example can include any of the above and/or below examples where the dynamically guiding IDS placement selects the individual nodes with a relatively higher likelihood of intrusions based upon node behavior changes.

Another example can include any of the above and/or below examples where the method further comprises utilizing a contextual-based rule pruning technique to reduce numbers of applicable packet-level rules.

Another example can include any of the above and/or below examples where the method further comprises providing an explanation why individual nodes have a relatively higher likelihood of intrusions.

Another example can include any of the above and/or below examples where the method further comprises presenting the explanation on a user-interface (UI).

Another example includes a system comprising a hardware processor and a storage resource storing computer-readable instructions which, when executed by the hardware processor, cause the hardware processor to translate packet-level rulesets into flow-level rulesets relating to a network and utilize the flow-level rulesets to perform rule checking on flow summaries relating to east-west traffic between nodes in a trusted zone of the network.

Another example can include any of the above and/or below examples where the processor is further configured to translate the packet-level rulesets into the flow-level rulesets using a flow summarizer.

Another example can include any of the above and/or below examples where the processor is further configured to perform guided traffic inspection between the nodes in the trusted zone via a rule distribution model.

Another example can include any of the above and/or below examples where the processor is further configured to employ a flow matcher that is configured to compare the east-west traffic from the flow summary to the translated flow-level ruleset to identify potential anomalies as flow-level rule violations.

Another example can include any of the above and/or below examples where the processor is further configured to employ a rule distribution model that periodically identifies specific IP addresses for deeper inspection based on observed behavioral changes relevant to the flow-level rulesets.

Another example can include any of the above and/or below examples where the processor is further configured to allow a user to select a setting that balances sensitivity versus resource usage for identifying the observed observational changes.

Another example can include any of the above and/or below examples where the processor is further configured to identify suspicious nodes in the trusted zone without analyzing detailed packet traces of every east-west communication.

Another example can include any of the above and/or below examples where the processor is further configured to employ security tools to evaluate the suspicious nodes in the trusted zone and not other nodes in the trusted zone.

Another example includes a computer-readable storage medium storing instructions which, when executed by a processing device, cause the processing device to perform acts comprising translating packet-level IDS rulesets into flow-level rulesets and performing rule checking of flow summaries utilizing the flow-level rulesets.

Another example can include any of the above and/or below examples where the computer-readable storage medium further comprises evaluating east-west traffic in a trusted zone of a network with a flow summarizer acting on the flow-level rulesets.

Another example can include any of the above and/or below examples where the evaluating is accomplished without packet capture of the evaluated east-west traffic.

Another example can include any of the above and/or below examples where the computer-readable storage medium further comprises employing a rule-distribution model configured to identify specific IP addresses of the east-west traffic for additional inspection based upon observed behavioral changes relevant to the flow-level rulesets.

Another example can include any of the above and/or below examples where the computer-readable storage medium further comprises receiving user input defining a threshold that represents an acceptable false-negative rate for the rule-distribution model.

**Claims**

1. A device-implemented method (1600) comprising:

   translating (1602) packet-level intrusion detection system, IDS, rulesets into flow-level rulesets; and,
   performing (1604) rule checking of flow summaries utilizing the flow-level rulesets.

2. The method of claim 1, wherein the flow summaries relate to east-west traffic between nodes in a trusted zone of a network.

3. The method of claim 2, further comprising employing a rule distribution model to dynamically guide IDS placement to individual nodes in the trusted zone.

4. The method of claim 3, wherein the dynamically guiding IDS placement selects the individual nodes with a relatively higher likelihood of intrusions based upon node behavior changes.

5. The method of claim 4, further comprising utilizing a contextual-based rule pruning technique to reduce numbers of applicable packet-level rules.

6. The method of claim 5, further comprising providing an explanation why individual nodes have a relatively higher likelihood of intrusions.

7. The method of claim 6, further comprising presenting the explanation on a user-interface (UI).

8. A system (1500) comprising:

   a hardware processor (1502); and
   a storage resource (1504) storing computer-readable instructions which, when executed by the hardware processor, cause the hardware processor to:

   translate packet-level rulesets into flow-level rulesets relating to a network; and,
   utilize the flow-level rulesets to perform rule checking on flow summaries relating to east-west traffic between nodes in a trusted zone of the network.

9. The system of claim 8, wherein the processor is further configured to translate the packet-level rulesets into the flow-level rulesets using a flow summarizer.

10. The system of claim 9, wherein the processor is further configured to perform guided traffic inspection between the nodes in the trusted zone via a rule distribution model.

11. The system of claim 10, wherein the processor is further configured to employ a flow matcher that is configured to compare the east-west traffic from the flow summary to the translated flow-level ruleset to identify potential anomalies as flow-level rule violations.

12. The system of claim 11, wherein the processor is further configured to employ a rule distribution model that periodically identifies specific IP addresses for deeper inspection based on observed behavioral changes relevant to the flow-level rulesets.

13. The system of claim 12, wherein the processor is further configured to allow a user to select a setting that balances sensitivity versus resource usage for identifying the observed observational changes.

14. The system of claim 13, wherein the processor is further configured to identify suspicious nodes in the trusted zone without analyzing detailed packet traces of every east-west communication.

15. A computer-readable storage medium (1504) storing instructions which, when executed by a processing device (1502), cause the processing device to perform any of claims 1-7.

System 100

External Network
106

North-South 130

Trusted zone 104

Facility 108

Internal Network 102

Core Layer 124

East-West
132

Core Routers 110

L3 126

Access Routers 112(1)

Access Routers 112(2)

L2 128

Aggr. Switches 114(1)

Aggr. Switches 114(2)

ToR 116(1)

ToR 116(2)

Server
120(1)

Server
120(2)

Server
120(3)

Server
120(4)

Rack
118(1)

Rack
118(2)

Rack
118(3)

Rack
118(4)

Tenants 122(1)

Tenants 122(2)

FIG. 1

System 100

External Network
106

North-South 130

Trusted zone 104

Facility 108

Internal Network 102

Security tool
204

East-West 132

Core
router
110

Node
202(1)

Node
202(3)

Node
202(4)

Node
202(2)

Node
202(6)

Node
202(7)

Node
202(5)

FIG. 2A

System 100

External Network
106

North-South 130

Trusted zone 104

Facility 108

Internal Network 102

Security tool
204

Flow summary
206

East-West 132

Core
router
110

Node
202(1)

Node
202(2)

Node
202(3)

Node
202(4)

Node
202(6)

Node
202(5)

Node
202(7)

FIG. 2B

System 100

External Network
106

North-South 130

Trusted zone 104

Facility 108

Internal Network 102

Security tool
204

KnowCheck
tool 208

Flow summary
206

East-West 132

Core
router
110

Node
202(1)

Node
202(3)

Node
202(4)

Node
202(2)

Node
202(6)

Node
202(7)

Node
202(5)

FIG. 2C

System 100

External Network
106

North-South 130

Trusted zone 104

Facility 108

Internal Network 102

Security tool
202

KnowCheck
tool 208

Flow summary
206

East-West 132

Core
router
110

Node
202(1)

Security tool
204(1)

Node
202(3)

Node
202(4)

Node
202(2)

Node
202(6)

Node
202(7)

Node
202(5)

FIG. 2D

KnowCheck 300

Security tool 204

IDS rules 320

310 Ruleset Translator 302

Rule Pruner 308

318

Translated Ruleset 322

312

Rule Distribution Model 306

316

Flow Matcher 304

314

Flow summary 206

FIG. 3

KnowCheck
300

IDS Rules 320 —— Ruleset Translator 302 —— Translated Ruleset 322

EP 4 757 249 A1

Offline 402

- - - - - - - - - - - - - - - - - - - - - - - - - - - - - - - - - - - - - - - - - - - - - - -

Online 404

Cloud Resources 406 —— Flow Summaries 206 —— Flow Matcher 304 —— Rule Distribution Model 306

Configure Virtual Tapping 410

Virtual Tapping Controller 408

Rule Pruner 308

Mirrored Tapped Traffic 412 —— Packet-Level IDS 414 —— Configure Rules 416

FIG. 4

| action | 5-tuple | packet direction | Stream Pattern |
|---|---|---|---|
| alert | tcp any any-> any 1024: | flow: established, to_server | stream_size: client,<,200 |

dsize:<65; content:"Cookie|3a 20|mstshash"; offest:11; depth:17; content:"XXX"; fast_pattern; endswith;

FIG. 5A

EP 4 757 249 A1

| 5-tuple | # of packets in flow | | At least one packet size | | # of bytes in flow | |
|---|---|---|---|---|---|---|
| | Min | Max | Min | Max | Min | Max |
| tcp any any-> any 1024: | 4 | Inf | 31 | 65 | 31 | 200 |

FIG. 5B

Flow matcher pipeline 602

```
                    ┌─────────────────────┐
                    │  IDS Rules 320      │
                    │  header fields      │
                    │  counter fields     │ ─ ─ ─ ─ ─ ─ ─ ─ ─ ┐
                    └─────────────────────┘                   │
                              ┆                               │
                              ┆                               ┆
                              ▼                               ▼
┌──────────────┐   ┌─────────────────────┐   ┌──────────────────────┐   ┌────────────────────────────┐
│ Flow Entry   │   │ Hash Tables 608     │   │ Recursive Flow       │   │ Full Matcher 304           │
│ 606          │──▶│ filter out most     │──▶│ Classifier           │──▶│ validates header fields    │
│ headers      │   │ rules               │   │ 610                  │   │ against matched rules      │
│ counters     │   │ using header fields │   │ checks counter fields│   │                            │
└──────────────┘   └─────────────────────┘   └──────────────────────┘   └────────────────────────────┘
```

┌─────────────────────┐
│  Output Labels      │
│  614                │
└─────────────────────┘

FIG. 6

**Rule A**
src IP: 172.0.0.x (24 bits)
dst IP: 68.192.x.x (10 bits)

Cannot be inserted
without false negatives

Mask bits according to table,
then hash to insert

**Hash Table 608(1)**
20 bits of src IP
8 bits of dst IP

**Hash Table 608(2)**
*30 bits of src IP*
6 bits of dst IP

**Flow Entry**
src IP: 172.0.0.3
dst IP: 68.192.13.1

Mask bits according to table,
then hash for matching rules

FIG. 7

**Rule A**
src IP: 172.0.0.x (24 bits)
dst IP: 10.1.192.x (20 bits)

**Rule B**
src IP: 172.0.10.x (24 bits)
dst IP: 10.165.x.x **(16 bits)**

**Rule C**
src IP: 172.0.192.x **(20 bits)**
dst IP: 10.0.x.x **(16 bits)**

d=3

**Hash Table 608(1)**
10 bits of src IP
8 bits of dst IP

original table is too
general leading to
many collisions

new table can
accommodate rules
with fewer
collisions

NEW!!

**Rule A**
src IP: 172.0.0.x (24 bits)
dst IP: 10.1.192.x (20 bits)

**Rule B**
src IP: 172.0.10.x (24 bits)
dst IP: 10.165.x.x (16 bits)

**Rule C**
src IP: 172.0.192.x (20 bits)
dst IP: 10.0.x.x (16 bits)

**Hash Table 608(2)**
20 bits of src IP
16 bits of dst IP

**Minimum bits used per field**
src IP: **20 bits**
dst IP: **16 bits**

EP 4 757 249 A1

FIG. 8

FIG. 9

Pipeline 1000

FIG. 10A

Graph 1010

FIG. 10B

Graph 1100

Fraction of rule set

FIG. 11

FIG. 12A

FIG. 12B

FIG. 13

FIG. 14A

FIG. 14B

FIG. 14C

Client
Device 1510

System 1500

Server 1530

Processing Resources 1502(1)

Storage Resources 1504(1)

KnowCheck tool 208(1)

Network(s)
1550

Processing Resources 1502(3)

Storage Resources 1504(3)

KnowCheck tool 208(3)

Client
Device 1540

Server 1520

Processing Resources 1502(4)

KnowCheck tool 208(4)

Processing Resources 1502(2)

Storage Resources 1504(2)

KnowCheck tool 208(2)

Hypervisor 1522

Application 1524

Application 1526

Application 1528

FIG. 15

EP 4 757 249 A1

Method 1600

1602

translate packet-level IDS rulesets into flow level rulesets

1604

perform rule checking of flow summaries utilizing the flow level rulesets

FIG. 16

Europäisches
Patentamt
European
Patent Office
Office européen
des brevets

**EUROPEAN SEARCH REPORT**

**Application Number**

EP 25 21 8976

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DUFFIELD N. ET AL: "Rule-Based Anomaly Detection on IP Flows", INFOCOM 2009. THE 28TH CONFERENCE ON COMPUTER COMMUNICATIONS. IEEE, 1 April 2009 (2009-04-01), pages 424-432, XP093389147, Piscataway, NJ, USA DOI: 10.1109/INFCOM.2009.5061947 ISBN: 978-1-4244-3512-8 * Section I.B; page 1 * * Section IV; page 4 * * Section IX; page 8 * | 1-15 | INV. H04L9/40 H04L43/022 H04L43/028 H04L43/062 |
| A | EP 3 005 620 B1 (ERICSSON TELEFON AB L M [SE]) 4 March 2020 (2020-03-04) * paragraph [0002] * * paragraph [0007] * * paragraph [0018] * * paragraph [0061] * * paragraph [0064] * * paragraph [0080] * * paragraph [0090] * | 1-15 | |
| A | US 2022/103595 A1 (SCHERER BRANDON WILLIAM [US] ET AL) 31 March 2022 (2022-03-31) * paragraph [0004] * * paragraph [0007] * * paragraph [0031] - paragraph [0035] * * paragraph [0040] * | 1-15 | |

**TECHNICAL FIELDS
SEARCHED    (IPC)**

H04L

The present search report has been drawn up for all claims

| Place of search | Date of completion of the search | Examiner |
|---|---|---|
| The Hague | 28 April 2026 | Cosse, Christophe |

EPO FORM 1503 03.82 (P04C01)

## ANNEX TO THE EUROPEAN SEARCH REPORT
## ON EUROPEAN PATENT APPLICATION NO.

EP 25 21 8976

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2026

| Patent document cited in search report | | Publication date | Patent family member(s) | | Publication date |
|---|---|---|---|---|---|
| EP 3005620 | B1 | 04-03-2020 | CN | 105229968 A | 06-01-2016 |
| | | | EP | 3005620 A1 | 13-04-2016 |
| | | | US | 2014355436 A1 | 04-12-2014 |
| | | | US | 2015341276 A1 | 26-11-2015 |
| | | | WO | 2014191851 A1 | 04-12-2014 |
| US 2022103595 | A1 | 31-03-2022 | US | 2022103595 A1 | 31-03-2022 |
| | | | US | 2023119649 A1 | 20-04-2023 |
| | | | US | 2025202950 A1 | 19-06-2025 |

EPO FORM P0459

For more details about this annex : see Official Journal of the European Patent Office, No. 12/82